(19) Europäisches Patentamt
European Patent Office
Office européen des brevets

(11) EP 2 159 240 A2

(12) **EUROPÄISCHE PATENTANMELDUNG**

(43) Veröffentlichungstag:
**03.03.2010 Patentblatt 2010/09**

(21) Anmeldenummer: **09168173.4**

(22) Anmeldetag: **19.08.2009**

(51) Int Cl.:
***C08G 18/66*** *(2006.01)* ***C08G 83/00*** *(2006.01)*
***C08J 9/00*** *(2006.01)*

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**AL BA RS**

(30) Priorität: **01.09.2008 EP 08163362**

(71) Anmelder: **BASF SE**
**67056 Ludwigshafen (DE)**

(72) Erfinder:
- **Templin, Markus**
  **49448, Lemförde (DE)**
- **Holters, Bianca**
  **26125, Oldenburg (DE)**
- **Schütte, Markus**
  **49080, Osnabrück (DE)**
- **Mohmeyer, Nils**
  **49076, Osnabrück (DE)**
- **Schönfelder, Daniel**
  **1000, Brüssel (BE)**
- **Bruchmann, Bernd**
  **67251, Freinsheim (DE)**
- **Manuel, Lopez**
  **08004, Barcelona (ES)**

(74) Vertreter: **Schuck, Alexander**
**Isenbruck Bösl Hörschler Wichmann LLP**
**Eastsite One**
**Seckenheimer Landstrasse 4**
**68163 Mannheim (DE)**

(54) **Plastisch verformbare Polyurethanschaumstoffe**

(57) Die Erfindung betrifft ein Verfahren zur Herstellung von plastisch verformbaren Polyurethan-Schaumstoffen, bei dem man
A) ein Polyisocyanat,
B) mindestens eine Polyhydroxyverbindung,
C) gegebenenfalls Kettenverlängerungs- und/oder Vernetzungsmittel,
D) Treibmittel enthaltend Wasser,
E) Katalysator sowie
F) gegebenenfalls sonstige Hilfsmittel und Zusatzstoffe

zu einer Reaktionsmischung vermischt und zu dem Polyurethanschaumstoff ausreagieren lässt, dadurch gekennzeichnet, dass die Komponente A) 0 bis 50 Gew.-%, bezogen auf die Komponente A), eines hyperverzweigten Polyisocyanats und die Komponente B) 0 bis 50 Gew.-%, bezogen auf die Komponente B), einer hyperverzweigten Polyhydroxyverbindung, ausgewählt aus einem hyperverzweigten Polyetherol, einem hyperverzweigten Polyesterpolyol und einem hyperverzweigten Polycarbonatpolyol, enthält, wobei mindestens eine der Komponenten A) oder B) mindestens 1 Gew.-% des betreffenden hyperverzweigten Polymers enthält.

EP 2 159 240 A2

**Beschreibung**

Die Erfindung betrifft plastisch verformbare Polyurethanschaumstoffe und deren Herstellung.

Plastisch verformbare Polyurethanschaumstoffe und deren Verwendung als Innenverkleidung in Kraftfahrzeugen sind bekannt und beispielsweise beschrieben im "Kunststoffhandbuch, Band 7, Polyurethane", Carl Hanser Verlag, 3. Auflage 1993, Kapitel 6.5.4.1.

EP 0 437 787 offenbart plastisch verformbare Polyurethanschaumstoffe und deren Verwendung zur Herstellung von Autodachhimmeln, herstellbar durch Umsetzung von a) Polyisocyanaten mit einer Polyol-Komponente b) aus Verbindungen mit mindestens zwei Hydroxylgruppen vom Molekulargewicht 187 bis 10000 g/mol, Kettenverlängerungs- und Vernetzungsmitteln mit mindestens zwei Hydroxylgruppen vom Molekulargewicht 32 bis 186, Wasser als Treibmittel, tert.-Aminkatalysatoren und gegebenenfalls Silicon-Schaumstabilisatoren, wobei als Komponente b) eine Polyolmischung aus 1.) 50 bis 70 Gew.-% an di- und/oder trifunktionellen, Hydroxylgruppen aufweisenden Polyethern einer OH-Zahl von 28 bis 600, und 2.) 20 bis 35 Gew.-% eines difunktionellen, Hydroxylgruppen aufweisenden Phthalsäurepolyesters einer OH-Zahl von 150 bis 440, 3.) 2 bis 10 Gew.-% Glycerin, 4.) 3,5 bis 7 Gew.-% Wasser, 5.) 0,3 bis 1 Gew.-% eines einbaufähigen tert.-Aminkatalysators und gegebenenfalls 6.) 0,1 bis 2 Gew.-% eines Silikon-Schaumstabilisators verwendet werden. Vorzugsweise wird als Polyol-Komponente b) eine Mischung aus trifunktionellen Polyethern mit einer OH-Zahl von 150 bis 500 auf Basis von Polypropylenoxid und einem langkettigen, trifunktionellen Polyether auf Basis von Polypropylen/Polyethylenoxid verwendet.

DE 43 33 795 offenbart plastisch verformbare Polyurethanschaumstoffe und deren Verwendung zur Herstellung von Autodachhimmeln, herstellbar durch Umsetzung von a) organischen Polyisocyanaten mit b) einer Mischung aus Polyhydroxylverbindungen in Gegenwart von c) Treibmitteln, d) Katalysatoren, e) Hilfsmitteln und/oder Zusatzstoffen, wobei die Mischung aus Polyhydroxylverbindungen b), bezogen auf das Gesamtgewicht der Polyhydroxyverbindungen b), b1) 40 bis 60 Gew.-% eines trifunktionellen Polyoxyalkylenpolyols mit einer Hydroxylzahl von 350 bis 500, b2) 15 bis 30 Gew.-% eines difunktionellen Polyoxyalkylenpolyols mit einer Hydroxylzahl von 200 bis 350, b3) 5 bis 20 Gew.-% eines dibis trifunktionellen Polyoxyalkylenpolyols mit einer Hydroxylzahl von 25 bis 40 und b4) 15 bis 30 Gew.-% eines Dialkylenglykols enthält. Besonders bevorzugt werden als Polyoxyalkylenpolyole mit Glycerin und 1,3-Propandiol gestartete Polyoxypropylenpolyole und mit einer Startermolekülmischung, bestehend aus Glycerin und Wasser gestartete Polyoxypropylen-Polyoxyethylenpolyole mit endständigen Ethylenoxideinheiten verwendet.

DE 10 2004 062 540 offenbart plastisch verformbare Polyurethanschaumstoffe und deren Verwendung zur Herstellung von Autodachhimmeln, herstellbar durch Umsetzung von organischen Polyisocyanaten mit Polyhydroxylverbindungen aus b1) Polyoxyalkylenpolyolen mit einer Funktionalität von 2 bis 3 und mit einer Hydroxylzahl von 25 bis 40, b2) Polyoxyalkylenpolyolen mit einer Funktionalität von 3 bis 4 und mit einer Hydroxylzahl von 400 bis 650, b3) Polyoxyalkylenpolyolen mit einer Funktionalität von 2 und mit einer Hydroxylzahl von 150 bis 550, b4) Polyesterpolyolen mit einer Funktionalität von 2 und mit einer Hydroxylzahl von 200 bis 350 und b5) Glycerin. Dabei werden bevorzugt als Etherkomponenten b1), b2) und b3) Verbindungen auf Basis von Ethylenoxid oder Propylenoxid eingesetzt, wobei in den Beispielen die Verbindung mit der kleinen Hydroxylzahl b1) auf Propylenoxyd und Ethylenoxyd basiert, während die Verbindungen mit den großen Hydroxylzahlen b2) und b3) ausschließlich auf Propylenoxid als Monomerkomponente basieren.

Die Anforderungen an im Automobil-Innenbereich eingebaute plastisch verformbare Polyurethanschaumstoffe, die meist als Verkleidungsteile im Dachbereich, so genannte Dachhimmel, eingesetzt werden, sind vielschichtig. So müssen diese eine gewisse Steifigkeit aufweisen und dürfen keine störenden Substanzen emittieren, die beispielsweise zu Geruchsbildung führen. Thermoverformbare Polyurethanschäume, welche in Dachhimmeln eingesetzt werden, werden zusammen mit Glasfasern, Textil und Materialien wie Pappe verklebt und in einer Metallform bei 130 °C 30 bis 45 s in die gewünschte Form gepresst. Damit die Anforderungen an Biegefestigkeit und Elastizitätsmodul, aber auch die notwendige Flexibilität für das Verformen bei 130 °C erreicht werden, wird eine besondere Mischung bestehend aus Polyolen mit OH-Zahlen kleiner als 300 mg KOH/g und solchen mit OH-Zahlen größer als 300 mg KOH/g verwendet. Nachteilig an diesen Rezepturen ist, dass durch hohe Anteile von Polyolen mit OH-Zahlen > 300 mg KOH/g zwar die mechanische Stabilität des Schaumstoffs gewährleistet wird, die Temperaturentwicklung bei der Reaktion im Schauminnern aber so stark ist, dass Temperaturen bis zu 200 °C erreicht werden, die nur langsam wieder abfallen. Diese hohen Temperaturen können dazu führen, dass - abgesehen von der Brandgefahr - Abbauprodukte entstehen, die von dem fertigen Dachhimmel emittiert werden und so die Geruchsbewertung der fertigen Dachhimmel verschlechtern.

Aufgabe der vorliegenden Erfindung war es daher, ein Verfahren zur Herstellung plastisch verformbarer Polyurethanschaumstoffe bereitzustellen, das die oben beschriebenen Nachteile nicht aufweist. Insbesondere soll die Temperaturentwicklung bei der Schaumherstellung möglichst gering gehalten werden.

Gelöst wird die Aufgabe durch ein Verfahren zur Herstellung von plastisch verformbaren Polyurethanschaumstoffen, bei dem man

A) ein Polyisocyanat,

B) mindestens eine Polyhydroxyverbindung,
C) gegebenenfalls Kettenverlängerungsmittel und/oder Vernetzungsmittel,
D) Treibmittel enthaltend Wasser,
E) Katalysator sowie
F) sonstige Hilfsmittel und/oder Zusatzstoffe

zu einer Reaktionsmischung vermischt und zu dem Polyurethanschaumstoff ausreagieren lässt, **dadurch gekennzeichnet, dass** die Komponente A) 0 bis 50 Gew.-%, bezogen auf die Komponente A), eines hyperverzweigten Polyisocyanats oder die Komponente B) 0 bis 50 Gew.-%, bezogen auf die Komponente B), mindestens einer hyperverzweigten Polyhydroxyverbindung, ausgewählt aus einem hyperverzweigten Polyetherol, einem hyperverzweigten Polyesterpolyol und einem hyperverzweigten Polycarbonatpolyol enthält, wobei mindestens eine der Komponenten A) und B) mindestens 1 Gew.-% des betreffenden hyperverzweigten Polymers enthält.

Die erfindungsgemäßen plastisch verformbaren Polyurethanschaumstoffe können bei Werkzeugtemperaturen von im Allgemeinen 80 bis 160 °C, bevorzugt von 100 bis 150 °C plastisch verformt werden.

Dendrimere, Arborole, Starburst-Polymere oder hyperverzweigte Polymere sind Bezeichnungen für Polymere, die sich durch eine stark verzweigte Struktur und eine hohe Funktionalität auszeichnen. Dendrimere sind molekular einheitliche Makromoleküle mit einem hoch symmetrischen Aufbau. Dendrimere lassen sich, ausgehend von einem zentralen Molekül, durch kontrollierte, schrittweise Verknüpfung von jeweils zwei oder mehr di- oder mehrfach funktionellen Monomeren mit jedem bereits gebundenen Monomer herstellen. Dabei vervielfacht sich mit jedem Verknüpfungsschritt die Zahl der Monomerendgruppen (und damit der Verknüpfungen) um den Faktor 2 oder höher, und man erhält generationenweise aufgebaute, monodisperse Polymere mit baumartigen Strukturen, im Idealfall kugelförmig, deren Äste jeweils exakt dieselbe Anzahl von Monomereinheiten enthalten. Aufgrund dieser perfekten Struktur sind die Polymereigenschaften vorteilhaft, beispielsweise beobachtet man eine überraschend geringe Viskosität und eine hohe Reaktivität aufgrund der hohen Anzahl funktioneller Gruppen an der Kugeloberfläche. Allerdings wird die Herstellung der monodispersen Dendrimere dadurch verkompliziert, dass bei jedem Verknüpfungsschritt Schutzgruppen eingeführt und wieder entfernt werden müssen und vor Beginn jeder neuen Wachstumsstufe intensive Reinigungsoperationen erforderlich sind, weshalb man Dendrimere üblicherweise nur im Labormaßstab herstellt.

Die speziellen Reaktionsbedingungen, die erforderlich sind, um Dendrimere herzustellen, seien nachfolgend am Beispiel der Herstellung von dendrimeren Polyurethanen erläutert.

Um bei der Herstellung der dendrimeren Polyurethane genau definierte Strukturen zu erhalten, ist es notwendig, jeweils mindestens so viele Monomere zuzusetzen, dass jede freie funktionelle Gruppe des Polymeren abreagieren kann. Zu Beginn der Reaktion wird zumeist ein mehrfach funktionelles Molekül, das als Startmolekül oder Initiatorkern bezeichnet wird, vorgelegt, an dessen funktionelle Gruppen je ein mit dieser funktionellen Gruppe reaktives Molekül angelagert wird. Danach erfolgt die Abtrennung der nicht umgesetzten Monomere und eine Reinigung des Zwischenproduktes. Danach wird an jede freie funktionelle Gruppe des Zwischenproduktes wiederum je ein mehrfach funktionelles Monomer angelagert, danach die Abtrennung der überschüssigen Monomeren und eine Reinigung durchgeführt, und so weiter verfahren, bis das gewünschte Molekulargewicht erreicht ist bzw. aus sterischen Gründen eine Anlagerung von weiteren Monomeren nicht mehr möglich ist. Die einzelnen Zwischenstufen werden auch als Generationen bezeichnet, wobei das durch Anlagerung von Monomeren an das Startmolekül entstandene Zwischenprodukt als erste Generation, das nächste Zwischenprodukt als zweite Generation, und so fort, bezeichnet wird. Auf Grund der unterschiedlichen Reaktivität der funktionellen Gruppen der eingesetzten Monomere ist gewährleistet, dass jeweils die reaktivsten funktionellen Gruppen mit den Endgruppen der Dendrimerketten reagieren und die weniger reaktiven funktionellen Gruppen der Monomere die funktionellen Endgruppen der nächsten Generation der dendrimeren Polyurethane bilden.

Auf diese Weise können dendrimere Polyurethane erzeugt werden, die bei jeder Generation ihre Funktionalität verdoppeln. In analoger Weise können auch drei- und höherfunktionelle Isocyanate und Verbindungen mit vier oder mehr mit Isocyanaten reaktiven funktionellen Gruppen umgesetzt werden. Der beschriebene generationenweise Aufbau ist erforderlich, um vollständig regelmäßig aufgebaute, dendrimere Strukturen zu erzeugen.

Im Gegensatz dazu sind hyperverzweigte Polymere sowohl molekular wie strukturell uneinheitlich. Sie werden durch einen nicht-generationenweisen Aufbau erhalten. Es ist daher auch nicht notwendig, Zwischenprodukte zu isolieren und zu reinigen. Hyperverzweigte Polymere können durch einfaches Vermischen der zum Aufbau erforderlichen Komponenten und deren Reaktion in einer sogenannten Ein-Topf-Reaktion erhalten werden. Hyperverzweigte Polymere können dendrimere Substrukturen aufweisen. Daneben weisen sie aber auch lineare Polymerketten und ungleiche Polymeräste auf. Zur Synthese der hyperverzweigten Polymere eignen sich insbesondere so genannte $AB_x$-Monomere. Diese weisen zwei verschiedene funktionelle Gruppen A und B in einem Molekül auf, die unter Bildung einer Verknüpfung intermolekular miteinander reagieren können. Die funktionelle Gruppe A ist dabei nur einmal pro Molekül enthalten und die funktionelle Gruppe B zweifach oder mehrfach. Durch die Reaktion der besagten $AB_x$-Monomere miteinander entstehen unvernetzte Polymere mit regelmäßig angeordneten Verzweigungsstellen. Die Polymere weisen an den Kettenenden fast ausschließlich B-Gruppen auf.

Weiterhin lassen sich hyperverzweigte Polymere über die $A_x$ + $B_y$ - Syntheseroute herstellen. Darin stehen $A_x$ und $B_y$ für zwei unterschiedliche Monomere mit den funktionellen Gruppen A und B und die Indices x und y für die Anzahl der funktionellen Gruppen pro Monomer. Bei der $A_x$ + $B_y$-Synthese, dargestellt hier am Beispiel einer $A_2$ + $B_3$-Synthese, setzt man ein difunktionelles Monomer $A_2$ mit einem trifunktionellen Monomer $B_3$ um. Dabei entsteht zunächst ein 1:1-Addukt aus A und B mit im Mittel einer funktionellen Gruppe A und zwei funktionellen Gruppen B, das dann ebenfalls zu einem hyperverzweigten Polymer reagieren kann. Auch die so erhaltenen hyperverzweigten Polymere weisen überwiegend B-Gruppen als Endgruppen auf.

Das Merkmal "hyperverzweigt" im Zusammenhang mit den Polymeren bedeutet im Sinne der Erfindung, dass der Verzweigungsgrad DB (degree of branching) der betreffenden Stoffe, der definiert ist als

$$DB\,(\%) = \frac{T+Z}{T+Z+L} \times 100,$$

wobei T die mittlere Anzahl der terminal gebundenen Monomereinheiten, Z die mittlere Anzahl der Verzweigungen bildenden Monomereinheiten und L die mittlere Anzahl der linear gebundenen Monomereinheiten in den Makromolekülen der jeweiligen Stoffe bedeuten, 10 bis 95 %, bevorzugt 25 - 90 % und besonders bevorzugt 30 bis 80 % beträgt.

Unter hyperverzweigten Polymeren werden im Rahmen dieser Erfindung im Wesentlichen unvernetzte Makromoleküle verstanden, die sowohl strukturell als auch molekular uneinheitlich sind. Sie können, ausgehend von einem Zentralmolekül, analog zu Dendrimeren, jedoch mit uneinheitlicher Kettenlänge der Äste aufgebaut sein. Sie können aber auch linear mit funktionellen seitenständigen Ästen aufgebaut sein oder aber, als Kombination der beiden Extreme, lineare und verzweigte Molekülteile aufweisen. Zur Definition von dendrimeren und hyperverzweigten Polymeren siehe auch P.J. Flory, J. Am. Chem. Soc. 1952, 74, 2718 und H. Frey et al., Chem. Eur. J. 2000, 6, No. 14, 2499.

Erfindungsgemäß werden hyperverzweigte Polyisocyanate, hyperverzweigte Polyetherole, hyperverzweigte Polyesterpolyole und/oder hyperverzweigte Polycarbonatpolyole eingesetzt.

Nicht hyperverzweigte Polyisocyanate

Die Komponente A) besteht aus einem oder mehreren nicht hyperverzweigten Polyisocyanaten und gegebenenfalls den hyperverzweigten Polyisocyanaten. Die Komponente A) enthält 50 bis 100 Gew.-% eines oder mehrerer nicht hyperverzweigter organischer Polyisocyanate. Als nicht hyperverzweigte organische Polyisocyanate werden vorzugsweise die technisch gut zugänglichen aromatischen Polyisocyanate, besonders bevorzugt Mischungen aus Diphenylmethandiisocyanaten (MDI) und PolyphenylPolymethylenpolyisocyanaten, sogenanntes Roh-MDI, vorteilhafterweise mit einem monomer-MDI-Gehalt von 30 bis 65 Gew.-%, besonders bevorzugt von 35 bis 60 Gew.-% und insbesondere von 35 bis 55 Gew.-% eingesetzt.

Die nicht hyperverzweigten Polyisocyanate können in Form von Polyisocyanatprepolymeren eingesetzt werden. Diese Polyisocyanatprepolymere sind erhältlich, indem vorstehend beschriebene Polyisocyanate (Bestandteil (a-1)) im Überschuss, beispielsweise bei Temperaturen von 30 bis 100 °C, bevorzugt bei etwa 80 °C, mit Polyolen (Bestandteil (a-2)), zum Prepolymer umgesetzt werden. Vorzugsweise werden dazu die im Folgenden unter b) beschriebenen Polyole eingesetzt. Gegebenenfalls können der Umsetzung zum Polyisocyanatprepolymer noch Kettenverlängerungsmittel (a-3) zugegeben werden. Als Kettenverlängerungsmittel (a-3) können alle im Folgenden unter D) beschriebenen Kettenverlängerer eingesetzt werden. Vorzugsweise wird dabei das Verhältnis von organischen Polyisocyanaten (a-1) zu Polyolen (a-2) und Kettenverlängerern (a-3) so gewählt, dass das Isocyanatprepolymer einen NCO-Gehalt von 10 bis 28 %, besonders bevorzugt von 14 bis 24 % aufweist.

Geeignet als organische Polyisocyanate sind auch die Isocyanurat-, Biuret-, Carbodiimid- und/oder vorzugsweise Urethangruppen enthaltende Roh-MDI Modifikationen. Außerdem kann es für besondere Anwendungsgebiete zweckmäßig sein, dem Roh-MDI untergeordnete Mengen, beispielsweise bis maximal 10 Gew.-%, Toluylen-diisocyanate-Isomerengemische und/oder gegebenenfalls mit Biuret-, Carbodiimid- und/oder Urethangruppen modifiziertes 4,4'- und/oder 2,4'-MDI zu zusetzen.

Hyperverzweigte Polyisocyanate

Die Komponente A) kann bis zu 50 Gew.-% eines oder mehrerer hyperverzweigter Polyisocyanate enthalten. Enthält die Komponente B) keine hyperverzweigten Polyhydroxyverbindungen, dann enthält die Komponente A) mindestens 1 Gew.-% eines hyperverzweigten Polyisocyanats, bevorzugt enthält sie dann von 5 bis 45 Gew.-%, besonders

bevorzugt 10 bis 40 Gew.-% eines hyperverzweigten Polyisocyanats.

Geeignete hyperverzweigte Polyisocyanate können hergestellt werden durch

(i) Herstellen eines Additionsproduktes (A), das eine mit Isocyanat reaktive Gruppe und mindestens zwei Isocyanatgruppen enthält, durch Umsetzen eines

(a) Di- oder Polyisocyanats I mit

(b) Verbindungen mit mindestens zwei mit Isocyanat reaktiven Gruppen,

wobei mindestens eine der Komponenten (a) oder (b) funktionelle Gruppen mit gegenüber den funktionellen Gruppen der anderen Komponente unterschiedlicher Reaktivität aufweist und wobei das Umsetzungsverhältnis so gewählt wird, dass im Mittel das Additionsprodukt (A) eine mit Isocyanat reaktive Gruppe enthält,

(ii) gegebenenfalls intermolekulare Additionsreaktion des Additionsprodukts (A) zu einem Polyadditionsprodukt (P), das im Mittel eine mit Isocyanat reaktive Gruppe und mehr als zwei Isocyanatgruppen enthält, und

(iii) Umsetzen des Additionsproduktes (A) und/oder des Polyadditionsprodukts (P) mit einem Di- oder Polyisocyanat II, wobei Di- oder Polyisocyanat I und Di- oder Polyisocyanat II vorzugsweise verschieden sind.

Unter einem hyperverzweigten Polyisocyanat ist im Rahmen dieser Erfindung ein Polyisocyanat zu verstehen, das mindestens drei, bevorzugt mindestens fünf, mehr bevorzugt mindestens sechs freie Isocyanatgruppen aufweist. Die Anzahl der Isocyanatgruppen ist prinzipiell nach oben nicht beschränkt, jedoch können Polyisocyanate mit sehr hoher Anzahl an Isocyanatgruppen unerwünschte Eigenschaften, wie beispielsweise hohe Viskosität oder schlechte Löslichkeit, aufweisen. Die hyperverzweigten Polyisocyanate weisen zumeist nicht mehr als 100 Isocyanatgruppen, bevorzugt nicht mehr als 50 Isocyanatgruppen auf.

Die hyperverzweigten Polyisocyanate haben im Allgemeinen ein Molekulargewicht $M_w$ von 800 bis 50.000 g/mol, bevorzugt 1.000 bis 10.000 g/mol und besonders bevorzugt 1.200 bis 5.000 g/mol. Ihr Verzweigungsgrad beträgt im Allgemeinen 10 bis 80, bevorzugt 15 bis 70, besonders bevorzugt 20 bis 60 %. Der Verzweigungsgrad ist wie oben definiert.

Als Di- und Polyisocyanate I kommen die aus dem Stand der Technik bekannten aliphatischen, cycloaliphatischen und aromatischen Isocyanate in Frage. Bevorzugte Di- oder Polyisocyanate I sind 4,4'-Diphenylmethandiisocyanat, die Mischungen aus monomeren Diphenylmethandiisocyanaten und höherkernigen Homologen des Diphenylmethandiisocyanats (Polymer-MDI), Tetramethylendiisocyanat, Tetramethylendiisocyanat-Trimere, Hexamethylendiisocyanat, Hexamethylendiisocyanat-Trimere, Isophorondiisocyanat-Trimer, 4,4'-Methylenbis(cyclohexyl)-diisocyanat, Xylylendiisocyanat, Tetramethylxylylendiisocyanat Dodecyldiisocyanat, Lysinalkylester-diisocyanat, wobei Alkyl für $C_1$ bis $C_{10}$-Alkyl steht, 2,2,4- oder 2,4,4-Trimethyl-1,6-hexamethylen-diisocyanat, 1,4-Diisocyanatocyclohexan, 1,3- oder 1,4-Bis(isocyanatomethyl)cyclohexan oder 4-Isocyanatomethyl-1,8-octamethylendiisocyanat.

Besonders bevorzugt sind Di- oder Polyisocyanate mit NCO-Gruppen unterschiedlicher Reaktivität, wie 2,4-Toluylendiisocyanat (2,4-TDI), 2,4'-Diphenylmethandiisocyanat (2,4'-MDI), Triisocyanatotoluol, Isophorondiisocyanat (IPDI), 2-Butyl-2-ethylpentamethylendiisocyanat, 2-Isocyanatopropylcyclohexylisocyanat, 3(4)-Isocyanatomethyl-1-methylcyclohexyl-isocyanat, 1,4-Diisocyanato-4-methylpentan, 2,4'-Methylenbis(cyclohexyl)diisocyanat und 4-Methylcyclohexan-1,3-diisocyanat (H-TDI).

Weiterhin sind Isocyanate besonders bevorzugt, deren NCO-Gruppen zunächst gleich reaktiv sind, bei denen sich jedoch durch Erstaddition eines Alkohols, Mercaptans oder Amins an einer NCO-Gruppe ein Reaktivitätsabfall bei der zweiten NCO-Gruppe induzieren lässt. Beispiele dafür sind Isocyanate, deren NCO-Gruppen über ein delokalisiertes Elektronensystem gekoppelt sind, z.B. 1,3- und 1,4-Phenylendiisocyanat, 1,5-Naphthylendiisocyanat, Diphenyldiisocyanat, Tolidindiisocyanat oder 2,6-Toluylendiisocyanat.

Als Di- und Polyisocyanate II kommen alle aus dem Stand der Technik bekannten aliphatischen, cycloaliphatischen und aromatischen Isocyanate in Frage. Neben den oben genannten Di- und Polyisocyanaten können weiterhin beispielsweise Oligo- oder Polyisocyanate verwendet werden, die sich aus den genannten Di- oder Triisocyanaten oder deren Mischungen durch Verknüpfung mittels Urethan-, Allophanat-, Harnstoff-, Biuret-, Uretdion-, Amid-, Isocyanurat-, Carbodiimid-, Uretonimin-, Oxadiazintrion- oder Iminooxadiazindion-Strukturen herstellen lassen.

Als Di- und Polyisocyanate II werden besonders bevorzugt verwendet 4,4'-Diphenylmethandiisocyanat, Mischungen aus Diphenylmethandiisocyanaten und höherkernigen Homologen des Diphenylmethandiisocyanats (Polymer-MDI), 1,3- und 1,4-Phenylendiisocyanat, 4-Isocyanatomethyl-1,8-octamethylendiisocyanat, Hexamethylendiisocyanat, Isocyanurat-, Uretdion-, Urethan-, Allophanat-, Iminooxadiazindion- oder Biuretgruppen aufweisende Oligomere aus Hexamethylendiisocyanat, Urethan-, Allophanat-, Carbodiimid- oder Uretonimingruppen aufweisende Oligomere

aus MDI oder Urethan-, Allophanat-, Carbodiimid- oder Uretonimingruppen aufweisende Oligomere aus TDI.

Sowohl für die Di- und Polyisocyanate I als auch für die Di- und Polyisocyanate II können auch Mischungen der genannten Isocyanate verwendet werden.

Die bei der Herstellung des Additionsproduktes (A) verwendeten Verbindungen (b) mit mindestens zwei mit Isocyanat reaktiven Gruppen sind aus Verbindungen ausgewählt, die Hydroxylgruppen, Mercaptogruppen oder Aminogruppen aufweisen. Bevorzugt sind Hydroxyl- und Aminogruppen.

Ebenfalls können zur Herstellung des Additionsprodukts (A) Verbindungen (b) mit mindestens zwei mit Isocyanat reaktiven Gruppen verwendet werden, die aus den oben genannten funktionellen Gruppen oder Gemischen davon ausgewählt sind und deren funktionelle Gruppen gegenüber NCO-Gruppen eine unterschiedliche Reaktivität aufweisen. Bevorzugt sind dabei Verbindungen mit mindestens einer primären und mindestens einer sekundären oder tertiären Hydroxylgruppe, mindestens einer Hydroxylgruppe und mindestens einer Mercaptogruppe oder mindestens einer Hydroxylgruppe und mindestens einer Aminogruppe im Molekül, da die Reaktivität der Aminogruppe gegenüber der Hydroxylgruppe bei der Umsetzung mit Isocyanat deutlich höher ist.

Weiterhin bevorzugt sind mit Isocyanat reaktive Verbindungen, deren mit Isocyanat reaktive funktionellen Gruppen zunächst gleich reaktiv sind, bei denen sich jedoch durch Addition mindestens eines Isocyanats ein Reaktivitätsabfall, bedingt durch sterische oder elektronische Einflüsse, bei den restlichen mit Isocyanat reaktiven Gruppen induzieren lässt. Dies ist beispielsweise bei der Verwendung von Trimethylolpropan oder Pentaerythrit als Komponente (b) der Fall.

Beispiele für Verbindungen (b) mit mindestens zwei mit Isocyanat reaktiven Gruppen sind Ethylenglykol, Diethylenglykol, Triethylenglykol, 1,2- und 1,3-Propandiol, Dipropylenglykol, Tripropylenglykol, Neopentylglykol, 1,2-, 1,3- und 1,4-Butandiol, 1,2-, 1,3- und 1,5-Pentandiol, Hexandiol, Hydroxypivalinsäureneopentylglykolester, Propan-1,2-dithiol, Butan-1,2-dithiol, Mercaptoethanol, Mercaptopropanol, Mercaptobutanol, Ethylendiamin, Toluylendiamin, Isophorondiamin, Cysteamin, Ethanolamin, N-Methylethanolamin, Propanolamin, Isopropanolamin, 2-(Butylamino)ethanol, 2-(Cyclohexylamino)ethanol, 2-Amino-1-butanol, 2-(2'-Aminoethoxy)ethanol oder höhere Alkoxylierungsprodukte des Ammoniaks, 4-Hydroxypiperidin, 1-Hydroxyethylpiperazin, Aminopropanthiol oder difunktionelle Polyether- oder Polyesterole, Glycerin, Trimethylolmethan, Trimethylolethan, Trimethylolpropan, 1,2,4-Butantriol, Tris(hydroxymethyl)-aminomethan, Tris(hydroxyethyl)aminomethan, 2-Amino-1,3-propandiol, 2-Amino-2-methyl-1,3-propandiol, Diethanolamin, Dipropanolamin, Diisopropanolamin, Ethanolpropanolamin, Bis(aminoethyl)-amin, Bis(aminopropyl)amin, Tris(aminoethyl)amin, Tris(aminopropyl)amin, Trisaminononan, Pentaerythrit, Bis(trimethylolpropan) oder Zucker, wie zum Beispiel Glucose, tri- oder tetrafunktionelle Polyether- oder Polyesterole. Dabei sind im Fall von difunktionellen Verbindungen Ethylenglykol, Diethylenglykol, Triethylenglykol, 1,2- und 1,3-Propandiol, Dipropylenglykol, 1,2- und 1,3-Butandiol, Neopentylglykol, 1,5-Pentandiol, 1,6-Hexandiol, Ethanolamin, Propanolamin, Isopropanolamin, Mercaptoethanol, 4-Hydroxypiperidin und 1-Hydroxyethylpiperazin besonders bevorzugt. Im Fall von trifunktionellen Verbindungen sind Glycerin, Trimethylolethan, Trimethylolpropan, 1,2,4-Butantriol, Pentaerythrit, Diethanolamin, Dipropanolamin und Tris(hydroxymethyl)aminomethan besonders bevorzugt.

Insbesondere sind die unter B) als Grundpolyole beschriebenen Polyetherole, enthaltend Oxyethylen- und/oder Oxypropylen-Einheiten, als Verbindungen (b) bevorzugt. Besonders bevorzugt sind Polyetherole, die im Mittel pro Molekül des Starteralkohols 1 bis 80, bevorzugt 1 bis 50 Oxyethylen und/oder Oxypropylen-Gruppen und überwiegend oder ausschließlich Oxypropylen-Gruppen enthalten.

In einer Ausführungsform der Erfindung sind Polyoxypropylen-Polyoxyethylenpolyole mit einer OH-Zahl von < 100 bevorzugt, die eine mittlere Funktionalität von 1,6 bis 3, bevorzugt von 1,7 bis 2,8, und Molekulargewichte von 450 bis 12.000, bevorzugt von 700 bis 8.000 g/mol und besonders bevorzugt 900 bis 5.500 g/mol aufweisen und die mit Wasser oder 2- und 3-wertigen Alkoholen, wie Ethylenglykol, 1,2- und 1,3-Propandiol, Diethylenglykol, Dipropylenglykol, 1,4-Butandiol, Glycerin oder Trimethylolpropan sowie deren Mischungen gestartet sind.

In einer weiteren Ausführungsform der Erfindung sind Polyoxypropylen-Polyole mit einer OH-Zahl > 100 bevorzugt, die eine mittlere Funktionalität von 1,6 bis 3, besonders bevorzugt von 1,9 bis 3, und Molekulargewichte von 150 bis 10.000, bevorzugt von 180 bis 5.000 g/mol und besonders bevorzugt 200 bis 3.000 g/mol aufweisen und die mit Wasser oder 2- und 3-wertigen Alkoholen, wie Ethylenglykol, 1,2- und 1,3-Propandiol, Diethylenglykol, Dipropylenglykol, 1,4-Butandiol, Glycerin oder Trimethylolpropan sowie deren Mischungen gestartet sind.

Als Verbindungen (b) sind weiterhin Polyesterpolyole geeignet. Geeignete Polyesterpolyole sind beispielsweise aus organischen Dicarbonsäuren mit 2 bis 12 Kohlenstoffatomen, vorzugsweise aliphatischen Dicarbonsäuren mit 4 bis 6 Kohlenstoffatomen und mehrwertigen Alkoholen, vorzugsweise Diolen, mit 2 bis 12 Kohlenstoffatomen, vorzugsweise 2 bis 6 Kohlenstoffatomen, aufgebaut. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure. Beispiele für

zwei und mehrwertige Alkohole, insbesondere Diole sind: Ethandiol, Diethylenglykol, 1,2- bzw. 1,3-Propandiol, Dipropylenglykol, Tripropylenglykol, 1,4-Butandiol, 1,5-Pentandiol, 3,3-Dimethyl-pentan-1,5-diol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol und 1,6-Hexandiol.

Weiterhin sind auch Mischungen der genannten Verbindungen einsetzbar.

Bei der Herstellung des Additionsprodukts (A) ist es notwendig, das Verhältnis von Di- oder Polyisocyanat I zu Verbindungen (b) mit mindestens zwei mit Isocyanat reaktiven Gruppen so einzustellen, dass das resultierende Additionsprodukt (A) im Mittel eine mit Isocyanat reaktive Gruppe und mindestens zwei NCO-Gruppen enthält.

Beispielsweise liegt bei der Herstellung des Additionsproduktes (A) aus einem Diisocyanat und einem dreiwertigen Alkohol das Umsetzungsverhältnis bei 2:1, und bei der Herstellung des Additionsproduktes (A) aus einem Diisocyanat und einem vierwertigen Alkohol das Umsetzungsverhältnis bei 3:1.

Weiterhin kann die Herstellung des Additionsprodukts (A) zum Beispiel auch aus einem Triisocyanat und einer zweiwertigen mit Isocyanat reaktiven Komponente erfolgen, wobei das molar Umsetzungsverhältnis bei 1:1 liegt.

Wird eine Mischung aus Verbindungen mit mindestens drei mit Isocyanat reaktiven Gruppen und Verbindungen mit zwei mit Isocyanat reaktiven Gruppen verwendet, so bewirken die Verbindungen mit zwei mit Isocyanat reaktiven Gruppen eine Verlängerung der Ketten. Im Allgemeinen beträgt die mittlere Funktionalität solcher Gemische mindestens 2.2, bevorzugt mindestens 2.4, besonders bevorzugt mindestens 2.6 und insbesondere bevorzugt mindestens 2.8.

Die Umsetzung zum Additionsprodukt (A) erfolgt üblicherweise bei einer Temperatur von - 20 bis 120°C, bevorzugt bei -10 bis 100°C. In einer bevorzugten Ausführungsform wird das Di- oder Polyisocyanat I vorgelegt und die Verbindung oder die Verbindungen der Komponente (b) zugegeben. Die Additionsprodukte (A) sind üblicherweise nicht über einen längeren Zeitraum stabil und werden daher bevorzugt direkt mit dem Di- oder Polyisocyanat II umgesetzt.

In einer bevorzugten Ausführungsform kann das Additionsprodukt (A) durch eine intermolekulare Additionsreaktion des Additionsproduktes (A) in ein Polyadditionsprodukt (P) überführt werden. Hierbei addiert sich die mit Isocyanat reaktive Gruppe des Additionsproduktes (A) an eine der Isocyanatgruppen eines weiteren Additionsproduktes (A). Die Anzahl der Additionsprodukte (A), die sich zu einem Polyadditionsprodukt (P) addieren, ist im Allgemeinen nicht beschränkt. Aus praktischen Gesichtspunkten wird üblicherweise die Additionsreaktion abgebrochen, bevor das Polyadditionsprodukt (P), z.B. aufgrund eines zu hohen Molekulargewichts oder aus sterischen Gründen, nachteilige Eigenschaften, wie beispielsweise eine zu hohe Viskosität oder eine zu schlechte Löslichkeit, aufweist.

Aufgrund der Beschaffenheit der Additionsprodukte (A) ist es möglich, dass aus der Additionsreaktion verschiedene Polyadditionsprodukte (P) resultieren können, die Verzweigungen aber keine Vernetzungen aufweisen. Ferner weisen die Polyadditionsprodukte (P) eine mit Isocyanat reaktive Gruppe und mehr als zwei Isocyanatgruppen auf. Die Anzahl der Isocyanatgruppen ergibt sich dabei aus der Beschaffenheit der eingesetzten Additionsprodukte (A) und dem Polyadditionsgrad.

Die intermolekulare Polyadditionsreaktion eines Additionsproduktes (A) zu einem Polyadditionsprodukt (P) kann üblicherweise in situ nach Beendigung der Reaktion zu dem Additionsprodukt (A) durch eine Temperaturerhöhung durchgeführt werden.

Weiterhin kann auch ein geeigneter Katalysator oder ein geeignetes Katalysatorgemisch zugegeben werden. Geeignete Katalysatoren sind im allgemeinen Verbindungen, die Urethan-Reaktionen katalysieren, zum Beispiel Amine, Ammoniumverbindungen, Aluminium-, Zinn-, Titan-, Zirkon-, oder Wismut-organische Verbindungen.

Beispielsweise können genannt werden Diazabicyclooctan (DABCO), Diazabicyclononen (DBN) und Diazabicycloundecen (DBU), Titantetrabutylat, Dibutylzinndilaurat, Zirkonacetylacetonat oder Gemische davon.

Die Zugabe des Katalysators erfolgt im Allgemeinen in einer Menge von 50 bis 10.000, bevorzugt von 100 bis 5.000 Gew. ppm bezogen auf die Menge des eingesetzten Isocyanats.

Ferner ist es auch möglich, sowohl durch Zugabe eines geeigneten Katalysators, als auch durch Wahl einer geeigneten Temperatur die intermolekulare Polyadditionsreaktion zu steuern.

Zum Abbruch der intermolekularen Polyadditionsreaktion gibt es verschiedene Möglichkeiten. Beispielsweise kann die Temperatur auf einen Bereich abgesenkt werden, in dem die Additionsreaktion zum Stillstand kommt und das Additionsprodukt (A) oder das Polyadditionsprodukt (P) lagerstabil ist.

In einer bevorzugten Ausführungsform wird, sobald aufgrund der intermolekularen Additionsreaktion des Additionsproduktes (A) ein Polyadditionsprodukt (P) mit gewünschtem Polyadditionsgrad vorliegt, dem Polyadditionsprodukt (P) zum Abbruch der Polyadditionsreaktion ein Di- oder Polyisocyanat II zugegeben. Durch Umsetzung des Polyadditionsprodukts (P) mit dem Di- oder Polyisocyanat II erhält man die erfindungsgemäßen hochfunktionellen Polyisocyanate.

Alternativ kann das Di- oder Polyisocyanat II auch zu einem Additionsprodukt (A) gegeben werden, das noch nicht in einer intermolekularen Additionsreaktion zu einem Polyadditionsprodukt (P) umgesetzt wurde.

Es ist jedoch zumeist technisch vorteilhaft, die intermolekulare Additionsreaktion zumindest in geringem Umfang durchzuführen, da gegebenenfalls im Additionsprodukt (A) noch geringe Mengen Di- oder Polyisocyanat I als Verunreinigung enthalten sein können und diese Verunreinigungen dann durch die intermolekulare Polyadditionsreaktion in das

Polyadditionsprodukt (P) mit eingebaut werden können.

Weiterhin ist es möglich, die mit Isocyanat reaktiven Komponenten (b) in geringem molaren Überschuss einzusetzen, um eine möglichst vollständige Reaktion des Isocyanats I zu erwirken. Vorteilhaft ist bei beiden Verfahrensweisen, dass so eine eventuell aufwendige Abtrennung von nicht umgesetztem Isocyanat I entfällt.

Bei der Umsetzung des Additionsproduktes (A) und/oder des Polyadditionsprodukts (P) mit dem Di- oder Polyisocyanat II wird üblicherweise mindestens eine Isocyanatgruppe des Di- oder Polyisocyanats II mit der mit Isocyanat reaktiven Gruppe des Additionsprodukts (A) oder des Polyadditionsprodukts (P) zur Reaktion gebracht. In einer bevorzugten Ausführungsform werden mindestens 10 %, insbesondere mindestens 40 % und besonders bevorzugt 50 - 100% der freien Isocyanatgruppen des Di- oder Polyisocyanats II mit einer entsprechenden Anzahl an Äquivalenten eines Additionsproduktes (A) und/oder Polyadditionsprodukts (P) zu dem erfindungsgemäßen hochfunktionellen Polyisocyanat umgesetzt.

In einer weiteren Ausführungsform wird zuerst eine Isocyanatgruppe eines Di- oder Polyisocyanats II mit einem Additionsprodukt (A1) oder einem Polyadditionsprodukt (P1) umgesetzt, anschließend wird mindestens eine weitere Isocyanatgruppe des Di- oder Polyisocyanats II mit einem Additionsprodukt (A2) oder einem Polyadditionsprodukt (P2) umgesetzt, wobei die Additionsprodukte (A1) und (A2) bzw. die Polyadditionsprodukte (P1) und (P2) nicht identisch sind. Für diese Ausführungsform wird vorzugsweise ein Di- oder Polyisocyanat II verwendet, das Isocyanatgruppen mit unterschiedlicher Reaktivität gegenüber den mit Isocyanat reaktiven Gruppen der Komponenten (A) und/oder (P) aufweist.

Die Herstellung der erfindungsgemäß eingesetzten hyperverzweigten Polyisocyanate kann in Masse oder in Lösungsmitteln erfolgen. Sofern die Herstellung unter Verwendung eines Lösungsmittels erfolgt, können dabei im Allgemeinen alle Lösungsmittel verwendet werden, die gegenüber den jeweiligen Edukten inert sind. Bevorzugt verwendet werden organische Lösungsmittel, wie zum Beispiel Diethylether, Tetrahydrofuran, Aceton, Butanon-2, Methylisobutylketon, Essigester, Butylacetat, Benzol, Toluol, Chlorbenzol, Xylol, Methoxyethylacetat, Methoxypropylacetat, Dimethylformamid, Dimethylacetamid, oder Solventnaphtha. Vorzugsweise wird die Herstellung in Masse, also ohne Zugabe eines Lösungsmittels, durchgeführt.

Die Herstellung der erfindungsgemäß eingesetzten hochfunktionellen Polyisocyanate erfolgt zumeist in einem Druckbereich von 2 mbar bis 20 bar, bevorzugt bei Normaldruck, in Reaktoren oder Reaktorkaskaden, die im Batchbetrieb, halbkontinuierlich oder kontinuierlich betrieben werden.

Durch die vorgenannte Einstellung der Reaktionsbedingungen und gegebenenfalls durch die Wahl des geeigneten Lösemittels können die erfindungsgemäßen Produkte nach der Herstellung ohne weitere Reinigung weiterverarbeitet werden.

Die erhaltenen hochfunktionellen hyperverzweigten Polyisocyanate können bei Bedarf auch hydrophobiert, hydrophiliert oder umfunktionalisiert werden. Dazu können die NCOterminierten Produkte z.B. mit Fettalkoholen, Fettaminen, Hydroxycarbonsäuren, Hydroxysulfonsäuren, Aminosäuren oder Acrylatgruppen enthaltenden Monoalkoholen, wie Hydroxyethylacrylat oder Hydroxyethylmethacrylat umgesetzt oder teilumgesetzt werden.

Sowohl die Umsetzung von Di- oder Polyisocyanat I zu einem Additionsprodukt (A) und/oder Polyadditionsprodukt (P) als auch die Reaktion von (A) oder (P) mit einem Di- oder Polyisocyanat II zu einen hochfunktionellen Polyisocyanat kann in einer Reaktionsvorrichtung erfolgen, was technisch und wirtschaftlich vorteilhaft ist.

Polyhydroxyverbindungen

Die Komponente B) besteht aus einer oder mehreren nicht hyperverzweigten Polyhydroxyverbindungen, dem sogenannten Grundpolyol, und gegebenenfalls einer oder mehreren hyperverzweigten Polyhydroxyverbindungen. Die Polyhydroxyverbindungen B) enthalten dabei mindestens 50 bis maximal 100 Gew.-% eines nicht hyperverzweigten Polyetherpolyols (Polyetherols) als Grundpolyol. Die als Grundpolyole eingesetzten Polyetherole weisen vorzugsweise ein Molekulargewicht von größer 450 g/mol auf.

Als Grundpolyole eingesetzte, nicht hyperverzweigte Polyetherole werden nach bekannten Verfahren hergestellt, beispielsweise durch anionische Polymerisation mit Alkalihydroxiden oder Alkalialkoholaten als Katalysatoren und unter Zusatz mindestens eines Startermoleküls, das meist 2 bis 3 reaktive Wasserstoffatome gebunden enthält, oder durch kationische Polymerisation mit Lewis-Säuren, wie Antimonpentachlorid oder Borfluorid-Etherat aus einem oder mehreren Alkylenoxiden mit 2 bis 4 Kohlenstoffatomen im Alkylenrest. Geeignete Alkylenoxide sind beispielsweise Tetrahydrofuran, 1,3-Propylenoxid, 1,2- bzw. 2,3-Butylenoxid und vorzugsweise Ethylenoxid und 1,2-Propylenoxid. Weiter können als Katalysatoren auch Multimetallcyanidverbindungen, so genannte DMC-Katalysatoren, eingesetzt werden. Die Alkylenoxide können einzeln, alternierend nacheinander oder als Mischungen verwendet werden. Bevorzugt weisen die Polyetherpolyole mindestens 75 % Propylenoxid auf. Wird das Polyetherpolyol zur Herstellung von Polyisocyanatprepolymeren eingesetzt, wird vorzugsweise zur Herstellung der Polyetherpolyole ausschließlich Propylenoxid als Alkylenoxid eingesetzt.

Als Startermolekül kommen Wasser oder 2- und 3-wertige Alkohole, wie Ethylenglykol, 1,2- und 1,3-Propandiol,

Diethylenglykol, Dipropylenglykol, 1,4-Butandiol, Glycerin oder Trimethylolpropan in Betracht.

Die nicht hyperverzweigten Polyetherpolyole, vorzugsweise Polyoxypropylen-Polyoxyethylenpolyole, besitzen vorzugsweise eine mittlere Funktionalität von 1,6 bis 3, besonders bevorzugt von 1,7 bis 2,8, und Molekulargewichte von 450 bis 12.000, bevorzugt von 700 bis 8.000 g/mol und besonders bevorzugt 900 bis 5.500 g/mol.

Bevorzugte Grundpolyole enthalten 2- bis 4-fach funktionelles Polyoxyalkylenpolyol mit einer Hydroxylzahl von 300 bis 900 und/oder di- bis trifunktionelles Polyoxyalkylenpolyol mit einer Hydroxylzahl von 25 bis 300. Im Allgemeinen beträgt der Gehalt der Komponente B an dem 2- bis 3-fach funktionellen Polyoxyalkylenpolyol mit einer OH-Zahl von 25 bis 300 mindestens 5 Gew.-%.

Die Polyoxyalkylenpolyole werden nach bekannten Verfahren, beispielsweise durch anionische Polymerisation von Alkylenoxiden unter Zusatz mindestens eines Startermoleküls, das 2 bis 4, vorzugsweise 2 bis 3 reaktive Wasserstoffatome gebunden enthält, in Gegenwart von Katalysatoren erhalten. Als Katalysatoren können Alkalihydroxide, wie Natrium- oder Kaliumhydroxid, oder Alkalialkoholate, wie Natriummethylat, Natrium- oder Kaliumethylat oder Kaliumisopropylat, oder bei kationischer Polymerisation Lewis-Säuren, wie Antimonpentachlorid, Bortrifluorid-Etherat oder Bleicherde als Katalysatoren eingesetzt werden. Weiter können als Katalysatoren auch Doppelmetallcyanidverbindungen, sogenannte DMC-Katalysatoren, eingesetzt werden.

Vorzugsweise werden als Alkylenoxide eine oder mehrere Verbindungen mit 2 bis 4 Kohlenstoffatomen im Alkylenrest, wie Tetrahydrofuran, 1,3-Propylenoxid, 1,2- bzw. 2,3-Butylenoxid, jeweils alleine oder in Form von Mischungen, und vorzugsweise Ethylenoxid und/oder 1,2-Propylenoxid eingesetzt.

Als Startermoleküle kommen beispielsweise Ethylenglykol, Diethylenglykol, Glycerin, Trimethylolpropan, Pentaerythrit, Methylamin, Ethylamin, Isopropylamin, Butylamin, Benzylamin, Anilin, Toluidin, Toluoldiamin, Naphtylamin, Ethylendiamin, Methylendianilin, 1,3,-Propandiamin, 1,6-Hexandiamin, Ethanolamin, Diethanolamin, Triethanolamin sowie andere zwei oder mehrwertige Alkohole oder ein oder mehrwertige Amine in Betracht.

Neben den genannten Polyhydroxyverbindungen B) können auch weitere Polyhydroxyverbindungen, wie weitere Polyetherole, Polyesterole oder andere, gegenüber Isocyanat reaktive Verbindungen, wie Polythiole oder Polyamine eingesetzt werden. Vorzugsweise beträgt der Gewichtsanteil der nicht hyperverzweigten Polyhydroxyverbindungen an dem Gesamtgewicht der Komponente B) mindestens 50 Gew.-%, besonders bevorzugt mindestens 70 Gew.-% und insbesondere mindestens 80 Gew.-%.

Die Komponente B) kann neben dem Grundpolyol bis zu 50 Gew.-% einer hyperverzweigten Polyhydroxyverbindung, ausgewählt aus der Gruppe bestehend aus hyperverzweigten Polyetherpolyolen, hyperverzweigten Polyesterpolyolen und hyperverzweigten Polycarbonatpolyolen, enthalten. Enthält die Komponente A) kein hyperverzweigtes Polyisocyanat, dann enthält die Komponente B) mindestens 1 Gew.-%, bevorzugt 5 bis 45 Gew.-%, besonders bevorzugt 10 bis 40 Gew.-% einer hyperverzweigten Polyhydroxyverbindung.

Hyperverzweigte Polyetherpolyole

Unter einem hyperverzweigten Polyetherpolyol ist ein Produkt zu verstehen, das neben den Ethergruppen, die das Polymergerüst bilden, end- oder seitenständig mindestens drei, bevorzugt mindestens sechs, besonders bevorzugt mindestens zehn OH-Gruppen aufweist. Die Anzahl der end- oder seitenständigen funktionellen Gruppen ist prinzipiell nach oben nicht beschränkt, jedoch können Produkte mit sehr hoher Anzahl funktioneller Gruppen unerwünschte Eigenschaften, wie beispielsweise hohe Viskosität oder schlechte Löslichkeit, aufweisen. Die hochfunktionellen Polyetherole der vorliegenden Erfindung weisen zumeist nicht mehr als 500 end- oder seitenständige funktionelle Gruppen, bevorzugt nicht mehr als 100 end- oder seitenständige funktionelle OH-Gruppen auf.

Geeignete hyperverzweigte Polyetherpolyole können beispielsweise hergestellt werden durch Umsetzung von mindestens einem tri- oder höherfunktionellen Alkohol und gegebenenfalls weiteren Alkoholen und/oder Verbindungen, die mit Alkoholen reaktive funktionelle Gruppen aufweisen, mit Hilfe von sauren Katalysatoren unter Polykondensationsbedingungen.

Weiterhin können hyperverzweigte Polyetherole durch ringöffnende Polymerisation von Glycidol, Glycerincarbonat, 3,3-Bis(2-hydroxyethyl)-oxetan (Pentaerythritoxetan) oder 3-Ethyl-3-(2-hydroxyethyl)-oxetan (Trimethylolpropanoxetan) hergestellt werden.

Geeignete Polyetherole sind weiterhin in der nicht-vorveröffentlichten europäischen Patentanmeldung EP 0851527.2 vom 15.02.2008 auf den Seiten 3 bis 9 und in den Beispielen beschrieben, auf die hiermit ausdrücklich Bezug genommen wird.

Bevorzugt werden gemäß der Polykondensationsfahrweise hergestellte Polyetherole eingesetzt.

Als tri- und höherfunktionelle Alkohole können in der Kondensation zum Beispiel Triole, wie Glycerin, Trimethylolmethan, Trimethylolethan, Trimethylolpropan, 1,2,4-Butantriol, Trishydroxymethylisocyanurat, Tris-hydroxyethylisocyanurat (THEIC) eingesetzt werden. Ebenso können Tetrole verwendet werden, wie Bistrimethylolpropan (Di-TMP) oder Pentaerythrit. Weiterhin können höherfunktionelle Polyole, wie Bis-Pentaerythrit (Di-Penta) oder Inositole verwendet werden. Weiterhin können auch Alkoxylierungsprodukte von den vorgenannten Alkoholen verwendet werden,

vorzugsweise mit 1 bis 40 Alkylenoxideinheiten pro Molekül. Besonders bevorzugt werden als Tri- und höherfunktionelle Alkohole aliphatische Alkohole und insbesondere solche mit primären Hydroxylgruppen eingesetzt, wie Trimethylolmethan, Trimethylolethan, Trimethylolpropan, Di-TMP, Pentaerythrit, Di-Penta und deren Alkoxylate mit 1 bis 30 Ethylenoxideinheiten pro Molekül sowie Glycerin-Ethoxylate mit 1 bis 30 Ethylenoxideinheiten pro Molekül verwendet. Ganz besonders bevorzugt werden verwendet Trimethylolpropan, Pentaerythrit und deren Ethoxylate mit im Mittel 1 bis 20 Ethylenoxideinheiten pro Molekül sowie Glycerin-Ethoxylate mit 1 bis 20 Ethylenoxideinheiten pro Molekül. Ebenfalls können die genannten Alkohole in Mischung eingesetzt werden.

Die tri- und höherfunktionellen Alkohole können auch in Mischung mit difunktionellen Alkoholen eingesetzt werden. Beispiele geeigneter Verbindungen mit zwei OH-Gruppen umfassen Ethylenglykol, Diethylenglykol, Triethylenglykol, 1,2- und 1,3-Propandiol, Dipropylenglykol, Tripropylenglykol, Neopentylglykol, 1,2-, 1,3- und 1,4-Butandiol, 1,2-, 1,3- und 1,5-Pentandiol, Hexandiol, Cyclopentandiol, Cyclohexandiol, Cyclohexandimethanol, Bis(4-Hydroxycyclohexyl)methan, Bis(4-Hydroxycyclohexyl)ethan, 2,2-Bis(4-Hydroxycyclohexyl)propan, difunktionelle Polyetherpolyole auf Basis von Ethylenoxid, Propylenoxid, Butylenoxid oder deren Gemischen, oder Polytetrahydrofuran. Selbstverständlich können difunktionelle Alkohole auch in Mischungen eingesetzt werden.

Die Diole dienen zur Feineinstellung der Eigenschaften des Polyetherpolyols. Falls difunktionelle Alkohole eingesetzt werden, wird das Verhältnis von difunktionellen Alkoholen zu den tri- und höherfunktionellen Alkoholen vom Fachmann je nach den gewünschten Eigenschaften des Polyethers festgelegt. Im Regelfall beträgt die Menge des oder der difunktionellen Alkohole 0 bis 80 mol %, bevorzugt 0 bis 70 Mol-%, besonders bevorzugt 0 bis 60 Mol-% und ganz besonders bevorzugt 0 bis 50 Mol-% bezüglich der Gesamtmenge aller Alkohole. Dabei können durch im Laufe der Reaktion abwechselnde Zugabe von tri- und höherfunktionellen Alkoholen und Diolen auch Blockcopolyether, beispielsweise Diolterminierte Polyether erhalten werden.

Es können auch difunktionelle Alkohole zu OH-terminierten Oligomeren vorkondensiert und anschließend der tri- oder höherfunktionelle Alkohol zugegeben werden. Auf diese Weise können ebenfalls hyperverzweigte Polymere mit linearen Blockstrukturen erhalten werden.

Weiter können auch Monoole zur Regelung der OH-Funktionalität während oder nach der Umsetzung der tri- und höherfunktionellen Alkohole zugegeben werden. Solche Monoole können beispielsweise lineare oder verzweigtkettige aliphatische oder aromatische Monoole sein. Vorzugsweise weisen diese mehr als 3, besonders bevorzugt mehr als 6 C-Atome auf. Weiterhin geeignet als Monoole sind monofunktionelle Polyetherole. Vorzugsweise werden maximal 50 Mol-% Monool, bezogen auf die Gesamtmenge des tri- und höherfunktionellen Alkohols zugegeben.

Zur Beschleunigung der Reaktion werden saure Katalysatoren oder Katalysatorgemische zugegeben. Geeignete Katalysatoren sind zum Beispiel Säuren mit einem $pK_s$-Wert von weniger als 2,2, besonders bevorzugt sind starke Säuren.

Beispiel für Säuren mit einem $pK_s$-Wert von weniger als 2,2 sind beispielsweise Phosphorsäure ($H_3PO_4$), Phosphorige Säure ($H_3PO_3$), Pyrophosphorsäure ($H_4P_2O_7$), Polyphosphorsäure, Hydrogensulfat ($HSO_4^-$), Schwefelsäure ($H_2SO_4$), Perchlorsäure, Salzsäure, Bromwasserstoffsäure, Chlorsulfonsäure, Methansulfonsäure, Trichlormethansulfonsäure, Trifluormethansulfonsäure, Benzolsulfonsäure oder p-Toluolsulfonsäure.

Weitere Beispiele für saure Katalysatoren sind saure Ionenaustauscher oder Ionenaustauscherharze. Geeignete saure Ionenaustauscher tragen zum Beispiel Sulfonsäure-Gruppen, Carbonsäure- oder Phosphonsäure-Gruppen. Auch können Ionenaustauscher verwendet werden, die ein hydrophiles Cellulose-Gerüst besitzen oder aus vernetztem Dextran oder Agarose bestehen, und saure funktionelle Gruppen, zum Beispiel Carboxylmethyl- oder Sulfoethylgruppen, tragen. Es können auch anorganische Ionenaustauscher, wie Zeolithe, Montmorillonite, Palygorskite, Bentonite und andere Aluminiumsilicate, Zirkoniumphosphat, Titanwolframat und Nickelhexacyanoferrat(II) verwendet werden. Besonders bevorzugt als Katalysatoren sind Phosphorsäure, Polyphosphorsäure, Chlorsulfonsäure, Methansulfonsäure, Trichlormethansulfonsäure, Trifluormethansulfonsäure, Benzolsulfonsäure, p-Toluolsulfonsäure oder saure Ionenaustauscher.

Ganz besonders bevorzugt sind Methansulfonsäure, Trifluormethansulfonsäure, p-Toluolsulfonsäure oder saure Ionenaustauscher.

Ferner ist es möglich, sowohl durch Zugabe des geeigneten Katalysators, als auch durch Wahl einer geeigneten Temperatur die Polykondensationsreaktion zu steuern. Weiterhin lässt sich über die Zusammensetzung der Ausgangskomponenten und über die Verweilzeit das mittlere Molekulargewicht des Polymeren sowie dessen Struktur einstellen.

Die Umsetzung erfolgt üblicherweise bei einer Temperatur von 0 bis 300 °C, bevorzugt 0 bis 250°C, besonders bevorzugt bei 60 bis 250°C und ganz besonders bevorzugt bei 80 bis 250°C in Substanz oder in Lösung. Dabei können allgemein alle Lösungsmittel verwendet werden, die gegenüber den jeweiligen Edukten inert sind. Wird Lösungsmittel eingesetzt, werden vorzugsweise organische Lösungsmittel, wie zum Beispiel Decan, Dodecan, Benzol, Toluol, Chlorbenzol, Xylol, Dimethylformamid, Dimethylacetamid oder Solventnaphtha verwendet.

In einer besonders bevorzugten Ausführungsform wird die Kondensationsreaktion in Substanz durchgeführt, das heißt ohne Zugabe von Lösungsmittel. Das bei der Reaktion freiwerdende Wasser kann zur Beschleunigung der Reaktion aus dem Reaktionsgleichgewicht entfernt werden, zum Beispiel destillativ, gegebenenfalls bei vermindertem

Druck.

Die Herstellung der hochfunktionellen Polyetherpolyole erfolgt zumeist in einem Druckbereich von 0,1 mbar bis 20 bar, bevorzugt bei 1 mbar bis 5 bar, in Reaktoren, die im Batchbetrieb, halbkontinuierlich oder kontinuierlich betrieben werden.

Bevorzugt wird die Reaktion in einer sogenannten "Eintopffahrweise" durchgeführt, in der das Monomer vollständig vorgelegt und die Reaktion in einem rückvermischten Reaktor durchgeführt wird. Denkbar sind aber auch Reaktionsführungen in einem mehrstufigen Reaktorsystem, beispielsweise einer Rührkesselkaskade oder einem Rohrreaktor. In einer bevorzugten alternativen Ausführungsform der vorliegenden Erfindung kann die Reaktion in einem Kneter, Extruder, Intensivmischer oder Schaufeltrockner durchgeführt werden.

Die Reaktion kann gegebenenfalls auch unter Zuhilfenahme von Ultraschall oder Mikrowellenstrahlung durchgeführt werden.

Zum Abbruch der intermolekularen Polykondensationsreaktion gibt es verschiedene Möglichkeiten. Beispielsweise kann die Temperatur auf einen Bereich abgesenkt werden, in dem die Reaktion zum Stillstand kommt und das Kondensationsprodukt lagerstabil ist.

Weiterhin kann man den Katalysator deaktivieren, zum Beispiel durch Zugabe einer basischen Komponente, wie einer Lewis-Base oder einer organischen oder anorganischen Base.

In einer weiteren bevorzugten Ausführungsform können die erfindungsgemäß eingesetzten Polyetherole neben den bereits durch die Reaktion erhaltenen OH-Gruppen weitere funktionelle Gruppen enthalten. Dabei können die Verbindungen, die mit Alkohol reaktive funktionelle Gruppen aufweisen, vor oder während dem Umsetzen der tri- oder höherfunktionellen Alkohole zum hochfunktionellen Polyether zugegeben werden.

Setzt man zusammen mit dem mindestens einen tri- oder höherfunktionellen Alkohol sowie gegebenenfalls weiteren Alkoholen Verbindungen, die mit Alkohol reaktive, von OH-Gruppen verschiedene funktionelle Gruppen aufweisen, in einem Schritt um, so erhält man ein Polyether-Polymer mit statistisch verteilten, von den Hydroxylgruppen verschiedenen Funktionalitäten. Eine derartige Funktionalisierung lässt sich zum Beispiel durch Zusatz von Verbindungen erzielen, die Mercaptogruppen, primäre, sekundäre oder tertiäre Aminogruppen, Estergruppen, Carbonsäuregruppen oder deren Derivate, Sulfonsäuregruppen oder deren Derivate, Phosphonsäuregruppen oder deren Derivate, Silangruppen, Siloxangruppen, Arylreste oder kurz- oder langkettige Alkylreste tragen.

Für die Modifikation mit Mercaptogruppen lässt sich zum Beispiel Mercaptoethanol einsetzten. Tertiäre Aminogruppen lassen sich zum Beispiel durch Einbau von aminogruppenhaltigen Alkoholen, wie Triethanolamin, Tripropanolamin, Triisopropanolamin, N-Methyldiethanolamin, N-Methyldipropanolamin oder N,N-Dimethylethanolamin erzeugen. Durch Zugabe von Dicarbonsäuren, Tricarbonsäuren, Dicarbonsäureestern, wie beispielsweise Adipinsäure, Terephthalsäuredimethylester oder Tricarbonsäureestern lassen sich Estergruppen erzeugen. Weiterhin können Estergruppen durch Umsetzung der OH-Gruppen mit Lactonen, speziell mit Caprolacton, erhalten werden. Durch Reaktion mit langkettigen Alkanolen oder Alkandiolen, mit langkettigen Alkenylbernsteinsäureanhydriden oder Polyisobutylenbernsteinsäureanhydriden lassen sich langkettige Alkylreste einbringen. Die Reaktion mit Alkyl- oder Arylisocyanaten, -diisocyanaten oder -oligoisocyanaten generiert entsprechende Urethangruppen aufweisende Polyether.

Eine nachträgliche Funktionalisierung kann man erhalten, indem das erhaltene hochfunktionelle, hoch- oder hyperverzweigte Polyetherpolyol in einem zusätzlichen Verfahrensschritt mit einem geeigneten Funktionalisierungsreagenz, welches mit den OH-Gruppen des Polyethers reagieren kann, umgesetzt wird.

Die erfindungsgemäßen hochfunktionellen Polyether können zum Beispiel durch Zugabe von Säure-, Säurehalogenid- oder Isocyanatgruppen enthaltenden Molekülen modifiziert werden. Weiterhin lassen sich beispielsweise Säuregruppen enthaltende Polyether durch Umsetzung der OH-Gruppen mit Anhydridgruppen enthaltenden Verbindungen erhalten. Estergruppen lassen sich nachträglich beispielsweise durch Umsetzung mit Caprolacton einführen. Dabei kann die Länge der Esterketten durch die Einsatzmenge an Caprolacton gesteuert werden.

Weiterhin können die erfindungsgemäß eingesetzten hyperverzweigten Polyetherole auch durch Umsetzung mit Alkylenoxiden, zum Beispiel Ethylenoxid, Propylenoxid, Butylenoxid oder deren Gemischen, in hochfunktionelle Polyetherpolyole enthaltend lineare Polyetherketten mit einstellbarer Polarität überführt werden.

Die nach dem beschriebenen Verfahren gebildeten hochfunktionellen hochverzweigten Polyether lösen sich gut in verschiedenen Lösemitteln, zum Beispiel in Wasser, Alkoholen, wie Methanol, Ethanol, Butanol, Alkohol/Wasser-Mischungen, Aceton, 2-Butanon, Essigester, Butylacetat, Methoxypropylacetat, Methoxyethylacetat, Tetrahydrofuran, Dimethylformamid, Dimethylacetamid, N-Methylpyrrolidon, Ethylencarbonat oder Propylencarbonat.

Hyperverzweigte Polyester

Geeignete hyperverzweigte Polyester sind erhältlich durch Umsetzung mindestens einer aliphatischen, cycloaliphatischen, araliphatischen oder aromatischen Dicarbonsäure ($A_2$) oder von Derivaten derselben mit

a) mindestens einem mindestens trifunktionellen aliphatischen, cycloaliphatischen, araliphatischen oder aromati-

schen Alkohol ($B_3$), oder

b) mit mindestens einem zweiwertigen aliphatischen, cycloaliphatischen, araliphatischen oder aromatischen Alkohol ($B_2$) und mindestens einem x-wertigen aliphatischen, cycloaliphatischen, araliphatischen oder aromatischen Alkohol ($C_x$), der mehr als zwei OH-Gruppen aufweist, wobei x eine Zahl größer 2, vorzugsweise 3 bis 8, besonders bevorzugt 3 bis 6, ganz besonders bevorzugt 3 bis 4 und insbesondere 3 ist,
oder durch Umsetzung mindestens einer aliphatischen, cycloaliphatischen, araliphatischen oder aromatischen Carbonsäure ($D_y$) oder deren Derivate, die mehr als zwei Säuregruppen aufweist, wobei y eine Zahl größer 2, vorzugsweise 3 bis 8, besonders bevorzugt 3 bis 6, ganz besonders bevorzugt 3 bis 4 und insbesondere 3 ist, mit

c) mindestens einem mindestens difunktionellen aliphatischen, cycloaliphatischen, araliphatischen oder aromatischen Alkohol ($B_2$), oder

d) mit mindestens einem zweiwertigen aliphatischen, cycloaliphatischen, araliphatischen oder aromatischen Alkohol ($B_2$) und mindestens einem x-wertigen aliphatischen, cycloaliphatischen, araliphatischen oder aromatischen Alkohol ($C_x$), der mehr als zwei OH-Gruppen aufweist, wobei x eine Zahl größer 2, vorzugsweise 3 bis 8, besonders bevorzugt 3 bis 6, ganz besonders bevorzugt 3 bis 4 und insbesondere 3 ist,

e) gegebenenfalls in Gegenwart weiterer funktionalisierter Bausteine E und

f) optional anschließender Umsetzung mit einer Monocarbonsäure F,

wobei man das Verhältnis der reaktiven Gruppen im Reaktionsgemisch so wählt, dass sich ein molares Verhältnis von OH-Gruppen zu Carboxylgruppen oder deren Derivaten von 5:1 bis 1:5, vorzugsweise von 4:1 bis 1:4, besonders bevorzugt von 3:1 bis 1:3 und ganz besonders bevorzugt von 2:1 bis 1:2 einstellt.

Unter hyperverzweigten Polyestern werden im Rahmen dieser Erfindung unvernetzte Polyester mit Hydroxyl- und Carboxylgruppen verstanden, die sowohl strukturell als auch molekular uneinheitlich sind. Unvernetzt im Rahmen dieser Schrift bedeutet, dass ein Vernetzungsgrad von weniger als 15 Gew.-%, bevorzugt von weniger als 10 Gew.-%, bestimmt über den unlöslichen Anteil des Polymeren, vorhanden ist. Der unlösliche Anteil des Polymeren wird bestimmt durch vierstündige Extraktion mit dem gleichen Lösungsmittel, wie es für die Gelpermeationschromatographie verwendet wird, also Tetrahydrofuran oder Hexafluorisopropanol, je nachdem, in welchem Lösungsmittel das Polymer besser löslich ist, in einer Soxhlet-Apparatur, Trocknung des Rückstandes bis zur Gewichtskonstanz sowie Wägung des verbliebenen Rückstandes.

Zu den Dicarbonsäuren ($A_2$) gehören beispielsweise aliphatische Dicarbonsäuren, wie Oxalsäure, Malonsäure, Bernsteinsäure, Glutarsäure, Adipinsäure, Pimelinsäure, Korksäure, Azelainsäure, Sebacinsäure, Undecan-$\alpha,\omega$-dicarbonsäure, Dodecan-$\alpha,\omega$-dicarbonsäure, cis- und trans-Cyclohexan-1,2-dicarbonsäure, cis- und trans-Cyclohexan-1,3-dicarbonsäure, cis- und trans-Cyclohexan-1,4-dicarbonsäure, cis- und trans-Cyclopentan-1,2-dicarbonsäure, cis- und trans-Cyclopentan-1,3-dicarbonsäure. Weiterhin können auch aromatische Dicarbonsäuren, wie zum Beispiel Phthalsäure, Isophthalsäure oder Terephthalsäure verwendet werden. Auch ungesättigte Dicarbonsäuren, wie Maleinsäure oder Fumarsäure, sind einsetzbar.

Die genannten Dicarbonsäuren können auch substituiert sein mit einem oder mehreren Resten, ausgewählt aus $C_1$-$C_{10}$-Alkylgruppen, $C_3$-$C_{12}$-Cycloalkylgruppen, Alkylengruppen wie Methylen oder Ethyliden oder $C_6$-$C_{14}$-Arylgruppen. Als beispielhafte Vertreter für substituierte Dicarbonsäuren seien genannt: 2-Methylmalonsäure, 2-Ethylmalonsäure, 2-Phenylmalonsäure, 2-Methylbernsteinsäure, 2-Ethylbernsteinsäure, 2-Phenylbernsteinsäure, Itaconsäure, 3,3-Dimethylglutarsäure.

Weiterhin lassen sich Gemische von zwei oder mehreren der vorgenannten Dicarbonsäuren einsetzen.

Die Dicarbonsäuren lassen sich entweder als solche oder in Form von ihren Derivaten einsetzen.

Es ist auch möglich, ein Gemisch aus einer Dicarbonsäure und einem oder mehreren ihrer Derivate einzusetzen. Gleichfalls ist es möglich, ein Gemisch mehrerer verschiedener Derivate von einer oder mehreren Dicarbonsäuren einzusetzen.

Besonders bevorzugt setzt man Malonsäure, Bernsteinsäure, Glutarsäure, Adipinsäure, Sebacinsäure, 1,2-, 1,3- oder 1,4-Cyclohexandicarbonsäure (Hexahydrophthalsäuren), Phthalsäure, Isophthalsäure, Terephthalsäure oder deren Mono- oder Dialkylester ein.

Umsetzbare Tricarbonsäuren oder Polycarbonsäuren ($D_y$) sind beispielsweise Aconitsäure, 1,3,5-Cyclohexantricarbonsäure, 1,2,4-Benzoltricarbonsäure, 1,3,5-Benzoltricarbonsäure, 1,2,4,5-Benzoltetracarbonsäure (Pyromellitsäure) sowie Mellitsäure und niedermolekulare Polyacrylsäuren.

Tricarbonsäuren oder Polycarbonsäuren ($D_y$) lassen sich entweder als solche oder aber in Form von Derivaten einsetzen.

Derivate sind die betreffenden Anhydride in monomerer oder auch polymerer Form, Mono- oder Dialkylester, bevorzugt Mono- oder Di-$C_1$-$C_4$-alkylester, besonders bevorzugt Mono- oder Dimethylester oder die entsprechenden Mono- oder Diethylester, ferner Mono- und Divinylester sowie gemischte Ester, bevorzugt gemischte Ester mit unterschiedlichen $C_1$-$C_4$-Alkylkomponenten, besonders bevorzugt gemischte Methylethylester.

$C_1$-$C_4$-Alkyl bedeutet im Einzelnen Methyl, Ethyl, iso-Propyl, n-Propyl, n-Butyl, iso-Butyl, sek.-Butyl und tert.-Butyl, bevorzugt Methyl, Ethyl und n-Butyl, besonders bevorzugt Methyl und Ethyl und ganz besonders bevorzugt Methyl.

Es ist auch möglich, ein Gemisch aus einer Tri- oder Polycarbonsäure und einem oder mehreren ihrer Derivate einzusetzen, zum Beispiel eine Mischung aus Pyromellitsäure und Pyromellitsäuredianhydrid. Gleichfalls ist es möglich, ein Gemisch mehrerer verschiedener Derivate von einer oder mehreren Tri- oder Polycarbonsäuren einzusetzen, zum Beispiel eine Mischung aus 1,3,5-Cyclohexantricarbonsäure und Pyromellitsäuredianhydrid.

Als Diole ($B_2$) verwendet man beispielsweise Ethylenglykol, Propan-1,2-diol, Propan-1,3-diol, Butan-1,2-diol, Butan-1,3-diol, Butan-1,4-diol, Butan-2,3-diol, Pentan-1,2-diol, Pentan-1,3-diol, Pentan-1,4-diol, Pentan-1,5-diol, Pentan-2,3-diol, Pentan-2,4-diol, Hexan-1,2-diol, Hexan-1,3-diol, Hexan-1,4-diol, Hexan-1,5-diol, Hexan-1,6-diol, Hexan-2,5-diol, Heptan-1,2-diol 1,7-Heptandiol, 1,8-Octandiol, 1,2-Octandiol, 1,9-Nonandiol, 1,2-Decandiol, 1,10-Decandiol, 1,2-Dodecandiol, 1,12-Dodecandiol, 1,5-Hexadien-3,4-diol, 1,2- und 1,3-Cyclopentandiole, 1,2-, 1,3- und 1,4-Cyclohexandiole, 1,1-, 1,2-, 1,3- und 1,4-Bis-(Hydroxymethyl)cyclohexane, 1,1-, 1,2-, 1,3- und 1,4-Bis(Hydroxyethyl)cyclohexane, Neopentylglykol, (2)-Methyl-2,4-pentandiol, 2,4-Dimethyl-2,4-Pentandiol, 2-Ethyl-1,3-hexandiol, 2,5-Dimethyl-2,5-hexandiol, 2,2,4-Trimethyl-1,3-pentandiol, Pinacol, Diethylenglykol, Triethylenglykol, Dipropylenglykol, Tripropylenglykol, Polyethylenglykole $HO(CH_2CH_2O)_n$-H oder Polypropylenglykole $HO(CH[CH_3]CH_2O)_n$-H, wobei n eine ganze Zahl und $n \geq 4$ ist, Polyethylenpolypropylenglykole, wobei die Abfolge der Ethylenoxid- oder Propylenoxid-Einheiten blockweise oder statistisch sein kann, Polytetramethylenglykole, vorzugsweise bis zu einem Molgewicht bis zu 5.000 g/mol, Poly-1,3-Propandiole, vorzugsweise mit einem Molgewicht bis zu 5.000 g/mol, Polycaprolactone oder Gemische von zwei oder mehr Vertretern der vorstehenden Verbindungen. Dabei kann eine oder auch beide Hydroxylgruppen in den vorstehend genannten Diolen durch SH-Gruppen substituiert werden. Bevorzugt eingesetzte Diole sind Ethylenglykol, 1,2-Propandiol, 1,3-Propandiol, 1,4-Butandiol, 1,5-Pentandiol, 1,6-Hexandiol, 1,8-Octandiol, 1,2-, 1,3- und 1,4-Cyclohexandiol, 1,3- und 1,4-Bis(hydroxymethyl)cyclohexan, sowie Diethylenglykol, Triethylenglykol, Dipropylenglykol, Tripropylenglykol, Polyethylenglykole $HO(CH_2CH_2O)_n$-H oder Polypropylenglykole $HO(CH[CH_3]CH_2O)_n$-H, wobei n eine ganze Zahl und $n \geq 4$ ist, Polyethylenpolypropylenglykole, wobei die Abfolge der Ethylenoxid- und der Propylenoxid-Einheiten blockweise oder statistisch sein kann, oder Polytetramethylenglykole, vorzugsweise bis zu einem Molgewicht bis zu 5.000 g/mol.

Die zweiwertigen Alkohole $B_2$ können optional noch weitere Funktionalitäten wie beispielsweise Carbonyl-, Carboxy-, Alkoxycarbonyl- oder Sulfonyl-Funktionen enthalten, wie beispielsweise Dimethylolpropionsäure oder Dimethylolbuttersäure, sowie deren $C_1$-$C_4$-Alkylester, Glycerinmonostearat oder Glycerinmonooleat.

Mindestens trifunktionelle Alkohole ($C_x$) umfassen Glycerin, Trimethylolmethan, Trimethylolethan, Trimethylolpropan, 1,2,4-Butantriol, Tris(hydroxymethyl)amin, Tris(hydroxyethyl)amin, Tris(hydroxypropyl)amin, Pentaerythrit, Diglycerin, Triglycerin oder höhere Kondensationsprodukte des Glycerins, Di(trimethylolpropan), Di(pentaerythrit), Trishydroxymethylisocyanurat, Tris(hydroxyethyl)isocyanurat (THEIC), Tris(hydroxypropyl)isocyanurat, Inositole oder Zukker, wie zum Beispiel Glucose, Fructose oder Sucrose, Zuckeralkohole wie z.B. Sorbit, Mannit, Threit, Erythrit, Adonit (Ribit), Arabit (Lyxit), Xylit, Dulcit (Galactit), Maltit, Isomalt, tri- oder höherfunktionelle Polyetherole auf Basis tri- oder höherfunktioneller Alkohole und Ethylenoxid, Propylenoxid und/oder Butylenoxid.

Dabei sind Glycerin, Diglycerin, Triglycerin, Trimethylolethan, Trimethylolpropan, Bis(trimethyolpropan), 1,2,4-Butantriol, Pentaerythrit, Di(pentaerythrit), Tris(hydroxyethyl)isocyanurat sowie deren Polyetherole auf Basis von Ethylenoxid und/oder Propylenoxid besonders bevorzugt.

Die mindestens dreiwertigen Alkohole $C_x$ können optional noch weitere Funktionalitäten wie beispielsweise Carbonyl-, Carboxy-, Alkoxycarbonyl- oder Sulfonyl-Funktionen enthalten, wie Gallussäure und deren Derivate, wie deren $C_1$-$C_4$-Alkylester.

Die Umsetzung kann in Gegenwart oder Abwesenheit eines Lösemittels durchgeführt werden. Als Lösemittel geeignet sind beispielsweise Kohlenwasserstoffe wie Paraffine, Aromaten, Ether und Ketone. Vorzugsweise wird die Reaktion frei von Lösungsmittel durchgeführt. Die Umsetzung kann in Gegenwart eines Wasser entziehenden Mittels als Additiv erfolgen, das man zu Beginn der Reaktion zusetzt. Geeignet sind beispielsweise Molekularsiebe, insbesondere Molekularsieb 4Å, sowie $MgSO_4$ und $Na_2SO_4$. Man kann auch während der Reaktion gebildetes Wasser bzw. Alkohol abdestillieren und beispielsweise einen Wasserabscheider einsetzen, bei dem das Wasser mit Hilfe eines Schleppmittels entfernt wird.

Man kann die Umsetzung in Abwesenheit von Katalysatoren durchführen. Vorzugsweise arbeitet man jedoch in Gegenwart von mindestens einem Katalysator. Diese sind bevorzugt saure anorganische, metallorganische oder organische Katalysatoren oder Gemische aus mehreren sauren anorganischen, metallorganischen oder organischen Katalysatoren.

Als saure anorganische Katalysatoren im Sinne der vorliegenden Erfindung sind beispielsweise Schwefelsäure,

Sulfate und Hydrogensulfate, wie Natriumhydrogensulfat, Phosphorsäure, Phosphonsäure, hypophosphorige Säure, Aluminiumsulfathydrat, Alaun, saures Kieselgel (pH ≥6, insbesondere ≤5) und saures Aluminiumoxid zu nennen. Weiterhin sind beispielsweise Aluminiumverbindungen der allgemeinen Formel $Al(OR^1)_3$ und Titanate einsetzbar. Bevorzugte saure metallorganische Katalysatoren sind beispielsweise Dialkylzinnoxide oder Dialkylzinnester. Bevorzugte saure organische Katalysatoren sind saure organische Verbindungen mit beispielsweise Phosphatgruppen, Sulfonsäuregruppen, Sulfatgruppen oder Phosphonsäuregruppen. Man kann auch saure Ionentauscher als saure organische Katalysatoren einsetzen.

Die Umsetzung wird bei Temperaturen von 60 bis 250 °C durchgeführt.

Die erfindungsgemäß verwendeten hyperverzweigten Polyester haben ein Molekulargewicht $M_w$ von mindestens 500, bevorzugt mindestens 600 und besonders bevorzugt 1000 g/mol. Die obere Grenze des Molekulargewichts $M_w$ ist bevorzugt 500.000 g/mol, besonders bevorzugt beträgt es nicht mehr als 200.000 und ganz besonders bevorzugt nicht mehr als 100.000 g/mol.

Die Angaben zur Polydispersität sowie zum zahlenmittleren und gewichtsmittleren Molekulargewicht $M_n$ und $M_w$ beziehen sich hier auf gelpermeationschromatographische Messungen, wobei Polymethylmethacrylat als Standard und Tetrahydrofuran, Dimethylformamid, Dimethylacetamid oder Hexafluorisopropanol als Elutionsmittel verwendet wurden. Die Methode ist im Analytiker Taschenbuch Bd. 4, Seiten 433 bis 442, Berlin 1984 beschrieben.

Die Polydispersität der erfindungsgemäß verwendeten Polyester beträgt im Allgemeinen 1,2 bis 50, bevorzugt 1,4 bis 40, besonders bevorzugt 1,5 bis 30 und ganz besonders bevorzugt 2 bis 30.

Hyperverzweigte Polycarbonate

Geeignete hyperverzweigte Polycarbonate können beispielsweise hergestellt werden durch

a) Umsetzung mindestens eines organischen Carbonats (A) der allgemeinen Formel $R^aOC(=O)OR^b$ mit mindestens einem aliphatischen Alkohol (B), welcher mindestens 3 OH-Gruppen aufweist, unter Eliminierung von Alkoholen $R^aOH$ bzw. $R^bOH$ zu einem oder mehreren Kondensationsprodukten (K), wobei $R^a$ und $R^b$ jeweils unabhängig voreinander ausgewählt sind unter geradkettigen oder verzweigten Alkyl-, Arylalkyl-, Cycloalkyl- und Arylresten, wobei $R^a$ und $R^b$ auch gemeinsam mit der Gruppe -OC(=O)O-, an die sie gebunden sind, für ein cyclisches Carbonat stehen können,
b) intermolekulare Umsetzung der Kondensationsprodukte (K) zu einem hochfunktionellen, hyperverzweigten Polycarbonat,

wobei das Mengenverhältnis der OH-Gruppen zu den Carbonaten im Reaktionsgemisch so gewählt wird, dass die Kondensationsprodukte (K) im Mittel entweder eine Carbonatgruppe und mehr als eine OH-Gruppe oder eine OH-Gruppe und mehr als eine Carbonatgruppe aufweisen. Die Reste $R^a$ und $R^b$ können gleiche oder verschiedene Bedeutungen aufweisen. In einer speziellen Ausführung weisen $R^a$ und $R^b$ gleiche Bedeutungen auf. Vorzugsweise sind $R^a$ und $R^b$ ausgewählt unter $C_1$-$C_{20}$-Alkyl, $C_5$-$C_7$-Cycloalkyl, $C_6$-$C_{10}$-Aryl und $C_6$-$C_{10}$-Aryl-$C_1$-$C_{20}$-alkyl, wie eingangs definiert. $R^a$ und $R^b$ können auch gemeinsam für $C_2$-$C_6$-Alkylen stehen. Besonders bevorzugt sind $R^a$ und $R^b$ ausgewählt unter geradkettigem und verzweigtem $C_1$-$C_5$-Alkyl, wie eingangs definiert.

Dialkyl- oder Diarylcarbonate können z. B. hergestellt werden aus der Reaktion von aliphatischen, araliphatischen oder aromatischen Alkoholen, vorzugsweise Monoalkoholen mit Phosgen. Weiterhin können sie auch über oxidative Carbonylierung der Alkohole oder Phenole mittels CO in Gegenwart von Edelmetallen, Sauerstoff oder $NO_x$ hergestellt werden. Zu Herstellmethoden von Diaryl- oder Dialkylcarbonaten siehe auch "Ullmann's Encyclopedia of Industrial Chemistry", 6th Edition, 2000 Electronic Release, Verlag Wiley-VCH.

Beispiele geeigneter Carbonate umfassen aliphatische oder aromatische Carbonate wie Ethylencarbonat, 1,2- oder 1,3-Propylencarbonat, Diphenylcarbonat, Ditolylcarbonat, Dixylylcarbonat, Dinaphthylcarbonat, Ethylphenylcarbonat, Dibenzylcarbonat, Dimethylcarbonat, Diethylcarbonat, Dipropylcarbonat, Dibutylcarbonat, Diisobutylcarbonat, Dipentylcarbonat, Dihexylcarbonat, Dicyclohexylcarbonat, Diheptylcarbonat, Dioctylcarbonat, Didecylacarbonat und Didodecylcarbonat.

Bevorzugt werden aliphatische Carbonate eingesetzt, insbesondere solche, bei denen die Reste 1 bis 5 C-Atome umfassen, wie z. B. Dimethylcarbonat, Diethylcarbonat, Dipropylcarbonat, Dibutylcarbonat oder Diisobutylcarbonat.

Die organischen Carbonate werden mit mindestens einem aliphatischen Alkohol (B), welcher mindestens drei OH-Gruppen aufweist oder Gemischen zweier oder mehrerer verschiedener Alkohole umgesetzt.

Beispiele für Verbindungen mit mindestens drei OH-Gruppen sind Glycerin, Trimethylolmethan, Trimethylolethan, Trimethylolpropan, 1,2,4-Butantriol, Tris(hydroxy-methyl)amin, Tris(hydroxyethyl)amin, Tris(hydroxypropyl)amin, Pentaerythrit, Bis(tri-methylolpropan), Di(pentaerythrit), Di- Tri- oder Oligoglycerine, oder Zucker, wie z. B. Glucose, tri- oder höherfunktionelle Polyetherole auf Basis tri- oder höherfunktioneller Alkohole und Ethylenoxid, Propylenoxid oder

Butylenoxid, oder Polyesterole. Dabei sind Glycerin, Trimethylolethan, Trimethylolpropan, 1,2,4-Butantriol, Pentaerythrit, sowie deren Polyetherole auf Basis von Ethylenoxid oder Propylenoxid besonders bevorzugt.

Diese mehrfunktionellen Alkohole können auch in Mischung mit difunktionellen Alkoholen (B') eingesetzt werden, mit der Maßgabe, dass die mittlere OH-Funktionalität aller eingesetzten Alkohole zusammen größer als 2 ist. Beispiele geeigneter Verbindungen mit zwei OH-Gruppen umfassen Ethylenglykol, Diethylenglykol, Triethylenglykol, 1,2- und 1,3-Propandiol, Dipropylenglykol, Tripropylenglykol, Neopentylglykol, 1,2-, 1,3- und 1,4-Butandiol, 1,2-, 1,3- und 1,5-Pentandiol, Hexandiol, Cyclopentandiol, Cyclohexandiol, Cyclohexandimethanol, difunktionelle Polyether- oder Polyesterole.

Die Reaktion des Carbonats mit dem Alkohol oder Alkoholgemisch zum erfindungsgemäßen verwendeten hochfunktionellen hyperverzweigten Polycarbonat erfolgt unter Eliminierung des monofunktionellen Alkohols oder Phenols aus dem Carbonat-Molekül.

Die nach dem geschilderten Verfahren gebildeten hochfunktionellen hyperverzweigten Polycarbonate sind nach der Reaktion, also ohne weitere Modifikation, mit Hydroxylgruppen und/oder mit Carbonatgruppen terminiert. Sie lösen sich gut in verschiedenen Lösemitteln, z. B. in Wasser, Alkoholen, wie Methanol, Ethanol, Butanol, Alkohol/Wasser-Mischungen, Aceton, 2-Butanon, Essigester, Butylacetat, Methoxypropylacetat, Methoxyethylacetat, Tetrahydrofuran, Dimethylformamid, Dimethylacetamid, N-Methylpyrrolidon, Ethylencarbonat oder Propylencarbonat.

Unter einem hochfunktionellen Polycarbonat ist im Rahmen dieser Erfindung ein Produkt zu verstehen, das neben den Carbonatgruppen, die das Polymergerüst bilden, end- oder seitenständig weiterhin mindestens vier, bevorzugt mindestens acht funktionelle Gruppen aufweist. Bei den funktionellen Gruppen handelt es sich um Carbonatgruppen und/oder um OH-Gruppen. Die Anzahl der end- oder seitenständigen funktionellen Gruppen ist prinzipiell nach oben nicht beschränkt, jedoch können Produkte mit sehr hoher Anzahl funktioneller Gruppen unerwünschte Eigenschaften, wie beispielsweise hohe Viskosität oder schlechte Löslichkeit, aufweisen. Die hochfunktionellen Polycarbonate der vorliegenden Erfindung weisen zumeist nicht mehr als 500 end- oder seitenständige funktionelle Gruppen, bevorzugt nicht mehr als 100, insbesondere nicht mehr als 50 end- oder seitenständige funktionelle Gruppen auf.

Bei der Herstellung der hochfunktionellen Polycarbonate ist es notwendig, das Verhältnis von den OH-Gruppen enthaltenden Verbindungen zu dem Carbonat so einzustellen, dass das resultierende einfachste Kondensationsprodukt (im weiteren Kondensationsprodukt (K) genannt) im Mittel entweder eine Carbonatgruppe und mehr als eine OH-Gruppe oder eine OH-Gruppe und mehr als eine Carbonatgruppe enthält. Die einfachste Struktur des Kondensationsproduktes (K) aus einem Carbonat (A) und einem Di- oder Polyalkohol (B) ergibt dabei die Anordnung $XY_n$ oder $YX_n$, wobei X eine Carbonatgruppe, Y eine Hydroxylgruppe und n in der Regel eine Zahl zwischen 1 und 6, vorzugsweise zwischen 1 und 4, besonders bevorzugt zwischen 1 und 3 darstellt. Die reaktive Gruppe, die dabei als einzelne Gruppe resultiert, wird im Folgenden "fokale Gruppe" genannt.

Liegt beispielsweise bei der Herstellung des einfachsten Kondensationsproduktes (K) aus einem Carbonat und einem zweiwertigen Alkohol das Umsetzungsverhältnis bei 1 : 1, so resultiert im Mittel ein Molekül des Typs XY, veranschaulicht durch die allgemeine Formel 1.

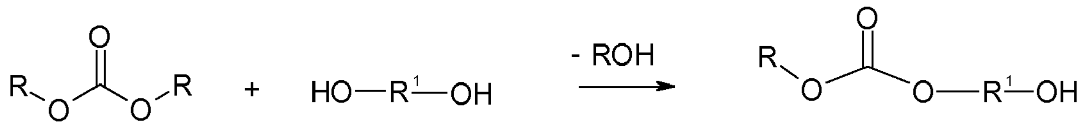


1

Bei der Herstellung des Kondensationsproduktes (K) aus einem Carbonat und einem dreiwertigen Alkohol bei einem Umsetzungsverhältnis von 1 : 1 resultiert im Mittel ein Molekül des Typs $XY_2$, veranschaulicht durch die allgemeine Formel 2. Fokale Gruppe ist hier eine Carbonatgruppe.

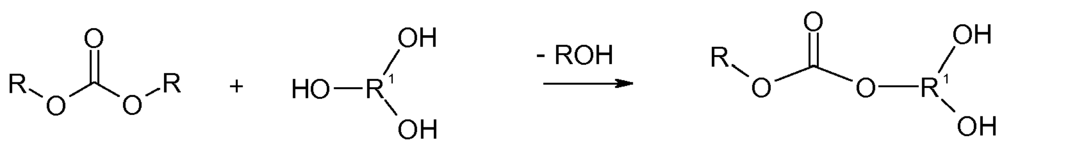


2

Bei der Herstellung des Kondensationsproduktes (K) aus einem Carbonat und einem vierwertigen Alkohol ebenfalls mit dem Umsetzungsverhältnis 1 : 1 resultiert im Mittel ein Molekül des Typs $XY_3$, veranschaulicht durch die

allgemeine Formel 3. Fokale Gruppe ist hier eine Carbonatgruppe.

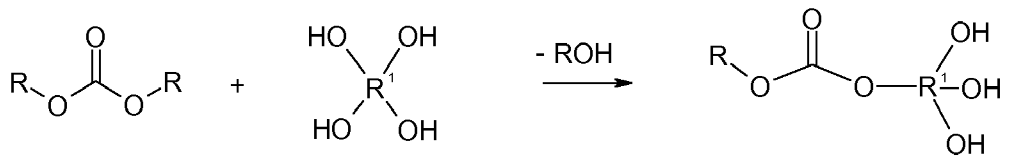


3

In den Formeln 1 bis 3 hat R die eingangs definierte Bedeutung und $R^1$steht für einen aliphatischen Rest.

Weiterhin kann die Herstellung des Kondensationsprodukts (K) z. B. auch aus einem Carbonat und einem dreiwertigen Alkohol, veranschaulicht durch die allgemeine Formel 4, erfolgen, wobei das molare Umsetzungsverhältnis bei 2 : 1 liegt. Hier resultiert im Mittel ein Molekül des Typs $X_2Y$, fokale Gruppe ist hier eine OH-Gruppe. In der Formel 4 haben R und $R^1$ die gleiche Bedeutung wie in den Formeln 1 bis 3.

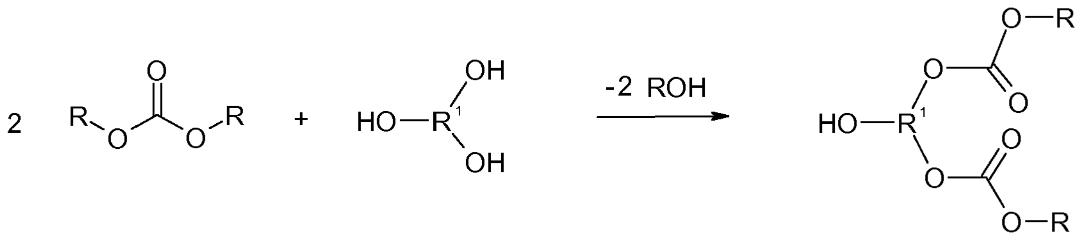


4

Werden zu den Komponenten zusätzlich difunktionelle Verbindungen, z. B. ein Dicarbonat oder ein Diol gegeben, so bewirkt dies eine Verlängerung der Ketten, wie beispielsweise in der allgemeinen Formel 5 veranschaulicht. Es resultiert wieder im Mittel ein Molekül des Typs $XY_2$, fokale Gruppe ist eine Carbonatgruppe.

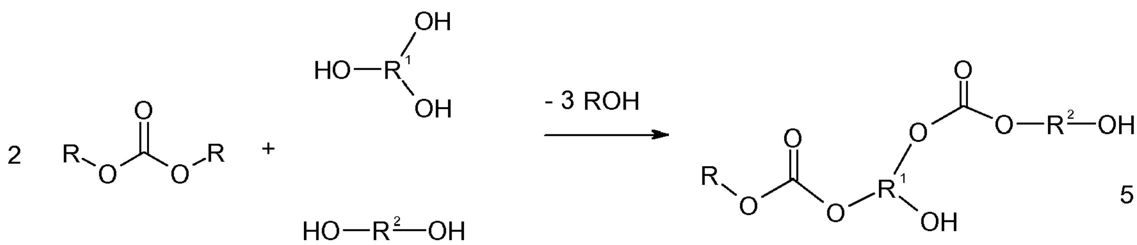


5

In Formel 5 bedeutet $R^2$ einen organischen, bevorzugt aliphatischen Rest, R und $R^1$ sind wie vorstehend beschrieben definiert.

Die beispielhaft in den Formeln 1 bis 5 beschriebenen einfachen Kondensationsprodukte (K) reagieren erfindungsgemäß bevorzugt intermolekular unter Bildung von hochfunktionellen Polykondensationsprodukten, im Folgenden Polykondensationsprodukte (P) genannt. Die Umsetzung zum Kondensationsprodukt (K) und zum Polykondensationsprodukt (P) erfolgt üblicherweise bei einer Temperatur von 0 bis 250 °C, bevorzugt bei 60 bis 160 °C in Substanz oder in Lösung. Dabei können allgemein alle Lösungsmittel verwendet werden, die gegenüber den jeweiligen Edukten inert sind. Bevorzugt verwendet werden organische Lösungsmittel, wie z. B. Decan, Dodecan, Benzol, Toluol, Chlorbenzol, Xylol, Dimethylformamid, Dimethylacetamid oder Solvent Naphtha.

In einer bevorzugten Ausführungsform wird die Kondensationsreaktion in Substanz durchgeführt. Der bei der Reaktion freiwerdende monofunktionelle Alkohol ROH oder das Phenol, kann zur Beschleunigung der Reaktion destillativ, gegebenenfalls bei vermindertem Druck, aus dem Reaktionsgleichgewicht entfernt werden.

Falls Abdestillieren vorgesehen ist, ist es regelmäßig empfehlenswert, solche Carbonate einzusetzen, welche bei der Umsetzung Alkohole ROH mit einem Siedepunkt von weniger als 140 °C freisetzen.

Zur Beschleunigung der Reaktion können auch Katalysatoren oder Katalysatorgemische zugegeben werden.

Geeignete Katalysatoren sind Verbindungen, die Veresterungs- oder Umesterungsreaktionen katalysieren, z. B. Alkalihydroxide, Alkalicarbonate, Alkalihydrogencarbonate, vorzugsweise des Natriums, Kaliums oder Cäsiums, tertiäre Amine, Guanidine, Ammoniumverbindungen, Phosphoniumverbindungen, Aluminium-, Zinn-, Zink, Titan-, Zirkon- oder Wismut-organische Verbindungen, weiterhin so genannte Doppelmetallcyanid (DMC)-Katalysatoren, wie z. B. in der DE 10138216 oder in der DE 10147712 beschrieben.

Vorzugsweise werden Kaliumhydroxid, Kaliumcarbonat, Kaliumhydrogencarbonat, Diazabicyclooctan (DABCO), Diazabicyclononen (DBN), Diazabicycloundecen (DBU), Imidazole, wie Imidazol, 1-Methylimidazol oder 1,2-Dimethylimidazol, Titantetrabutylat, Titantetraisopropylat, Dibutylzinnoxid, Dibutylzinndilaurat, Zinndioctoat, Zirkonacetylacetonat oder Gemische davon eingesetzt.

Die Zugabe des Katalysators erfolgt im Allgemeinen in einer Menge von 50 bis 10 000, bevorzugt von 100 bis 5000 Gew.-ppm bezogen auf die Menge des eingesetzten Alkohols oder Alkoholgemisches.

Ferner ist es auch möglich, sowohl durch Zugabe des geeigneten Katalysators, als auch durch Wahl einer geeigneten Temperatur die intermolekulare Polykondensationsreaktion zu steuern. Weiterhin lässt sich über die Zusammensetzung der Ausgangskomponenten und über die Verweilzeit das mittlere Molekulargewicht des Polymeren (P) einstellen.

Die Kondensationsprodukte (K) bzw. die Polykondensationsprodukte (P), die bei erhöhter Temperatur hergestellt wurden, sind bei Raumtemperatur üblicherweise über einen längeren Zeitraum stabil.

Aufgrund der Beschaffenheit der Kondensationsprodukte (K) ist es möglich, dass aus der Kondensationsreaktion Polykondensationsprodukte (P) mit unterschiedlichen Strukturen resultieren können, die Verzweigungen, aber keine Vernetzungen aufweisen. Ferner weisen die Polykondensationsprodukte (P) im Idealfall entweder eine Carbonatgruppe als fokale Gruppe und mehr als zwei OH-Gruppen oder aber eine OH-Gruppe als fokale Gruppe und mehr als zwei Carbonatgruppen auf. Die Anzahl der reaktiven Gruppen ergibt sich dabei aus der Beschaffenheit der eingesetzten Kondensationsprodukte (K) und dem Polykondensationsgrad.

Beispielsweise kann ein Kondensationsprodukt (K) gemäß der allgemeinen Formel 2 durch dreifache intermolekulare Kondensation zu zwei verschiedenen Polykondensationsprodukten (P), die in den allgemeinen Formeln 6 und 7 wiedergegeben werden, reagieren.

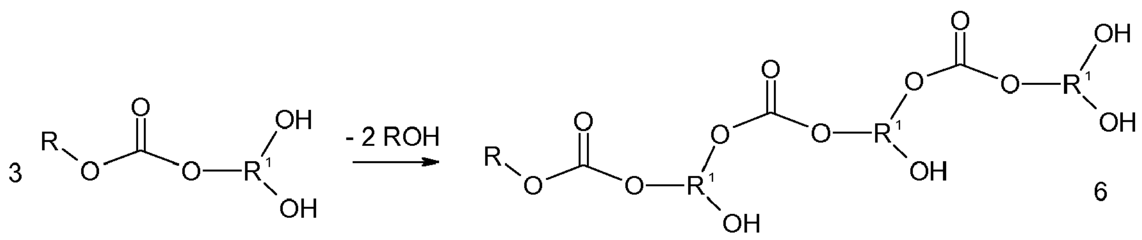


6

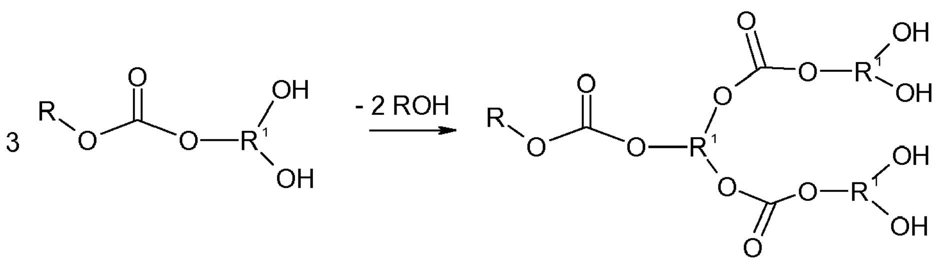


7

In Formel 6 und 7 sind R und $R^1$ wie vorstehend definiert.

Zum Abbruch der intermolekularen Polykondensationsreaktion gibt es verschiedene Möglichkeiten. Beispielsweise kann die Temperatur auf einen Bereich abgesenkt werden, in dem die Reaktion zum Stillstand kommt und das Produkt (K) oder das Polykondensationsprodukt (P) lagerstabil ist.

In einer weiteren Ausführungsform kann, sobald aufgrund der intermolekularen Reaktion des Kondensationsproduktes (K) ein Polykondensationsprodukt (P) mit gewünschten Polykondensationsgrad vorliegt, dem Produkt (P) zum Abbruch der Reaktion ein Produkt mit gegenüber der fokalen Gruppe von (P) reaktiven Gruppen zugesetzt werden.

So kann bei einer Carbonatgruppe als fokaler Gruppe z. B. ein Mono-, Di- oder Polyamin zugegeben werden. Bei einer Hydroxylgruppe als fokaler Gruppe kann dem Produkt (P) beispielsweise ein Mono-, Di- oder Polyisocyanat, eine Epoxidgruppen enthaltende Verbindung oder ein mit OH-Gruppen reaktives Säurederivat zugegeben werden.

Die Herstellung der erfindungsgemäßen hochfunktionellen Polycarbonate erfolgt zumeist in einem Druckbereich von 0,1 mbar bis 20 bar, bevorzugt bei 1 mbar bis 5 bar, in Reaktoren oder Reaktorkaskaden, die im Batchbetrieb, halbkontinuierlich oder kontinuierlich betrieben werden.

Durch die vorgenannte Einstellung der Reaktionsbedingungen und gegebenenfalls durch die Wahl des geeigneten Lösemittels können die Produkte nach der Herstellung ohne weitere Reinigung weiterverarbeitet werden.

In einer weiteren bevorzugten Ausführungsform können die Polycarbonate neben den bereits durch die Reaktion erhaltenden funktionellen Gruppen weitere funktionelle Gruppen erhalten. Die Funktionalisierung kann dabei während des Molekulargewichtsaufbaus oder auch nachträglich, d. h. nach Beendigung der eigentlichen Polykondensation erfolgen.

Gibt man vor oder während des Molekulargewichtsaufbaus Komponenten zu, die neben Hydroxyl- oder Carbonatgruppen weitere funktionelle Gruppen oder funktionelle Elemente besitzen, so erhält man ein Polycarbonat-Polymer mit statistisch verteilten, von den Carbonat- oder Hydroxylgruppen verschiedenen Funktionalitäten.

Derartige Effekte lassen sich z. B. durch Zusatz von Verbindungen während der Polykondensation erzielen, die neben Hydroxylgruppen oder Carbonatgruppen weitere funktionelle Gruppen oder funktionelle Elemente, wie Mercaptogruppen, primäre, sekundäre oder tertiäre Aminogruppen, Ethergruppen, Derivate von Carbonsäuren, Derivate von Sulfonsäuren, Derivate von Phosphonsäuren, Arylreste oder langkettige Alkylreste tragen. Zur Modifikation mittels Carbamatgruppen lassen sich beispielsweise Ethanolamin, Propanolamin, Isopropanolamin, 2-(Butylamino)ethanol, 2-(Cyclohexylamino)ethanol, 2-Amino-1-butanol, 2-(2'-Amino-ethoxy)ethanol oder höhere Alkoxylierungsprodukte des Ammoniaks, 4-Hydroxy-piperidin, 1-Hydroxyethylpiperazin, Diethanolamin, Dipropanolamin, Diisopropanolamin, Tris(hydroxymethyl)aminomethan, Tris(hydroxyethyl)aminomethan, Ethylendiamin, Propylendiamin, Hexamethylendiamin oder Isophorondiamin verwenden.

Für die Modifikation mit Mercaptogruppen lässt sich z. B. Mercaptoethanol oder Thioglycerin einsetzten. Tertiäre Aminogruppen lassen sich z. B. durch Einbau von N-Methyldiethanolamin, N-Methyldipropanolamin oder N,N-Dimethylethanolamin erzeugen. Ethergruppen können z. B. durch Einkondensation von di- oder höherfunktionellen Polyetherolen generiert werden. Durch Reaktion mit langkettigen Alkandiolen lassen sich langkettige Alkylreste einbringen, die Reaktion mit Alkyl- oder Aryldiisocyanaten generiert Alkyl-, Aryl- und Urethangruppen aufweisende Polycarbonate.

Eine nachträgliche Funktionalisierung kann man erhalten, indem das erhaltene hochfunktionelle, hyperverzweigte Polycarbonat mit einem geeigneten Funktionalisierungsreagenz, welches mit den OH- und/oder Carbonatgruppen des Polycarbonates reagieren kann, umsetzt.

Hydroxylgruppen enthaltende hochfunktionelle, hyperverzweigte Polycarbonate können z. B. durch Zugabe von Säuregruppen- oder Isocyanatgruppen enthaltenden Molekülen modifiziert werden. Beispielsweise lassen sich Säuregruppen enthaltende Polycarbonate durch Umsetzung mit Anhydridgruppen enthaltenden Verbindungen erhalten.

Weiterhin können Hydroxylgruppen enthaltende hochfunktionelle Polycarbonate auch durch Umsetzung mit Alkylenoxiden, z. B. Ethylenoxid, Propylenoxid oder Butylenoxid, in hochfunktionelle Polycarbonat-Polyetherpolyole überführt werden.

Ein großer Vorteil des erfindungsgemäßen Verfahrens liegt in seiner Wirtschaftlichkeit. Sowohl die Umsetzung zu einem Kondensationsprodukt (K) oder Polykondensationsprodukt (P) als auch die Reaktion von (K) oder (P) zu Polycarbonaten mit anderen funktionellen Gruppen oder Elementen kann in einer Reaktionsvorrichtung erfolgen, was technisch und wirtschaftlich vorteilhaft ist.

Als Kettenverlängerungsmittel und/oder Vernetzungsmittel C) können Substanzen mit einem Molekulargewicht von vorzugsweise kleiner 500 g/mol, besonders bevorzugt von 60 bis 400 g/mol eingesetzt werden, wobei Kettenverlängerer zwei gegenüber Isocyanaten reaktive Wasserstoffatome und Vernetzungsmittel drei gegenüber Isocyanat reaktive Wasserstoffatome aufweisen. Diese können einzeln oder bevorzugt in Form von Mischungen eingesetzt werden. Vorzugsweise werden Diole und/oder Triole mit Molekulargewichten kleiner als 400, besonders bevorzugt von 60 bis 300 und insbesondere 60 bis 150 eingesetzt. In Betracht kommen beispielsweise aliphatische, cycloaliphatische und/oder araliphatische Diole mit 2 bis 14, vorzugsweise 2 bis 10 Kohlenstoffatomen, wie Ethylenglykol, 1,3-Propandiol, 1,4-Butandiol, 1,6-Hexandiol, 1,10-Decandiol und Bis-(2-hydroxyethyl)-hydrochinon, 1,2-, 1,3-, 1,4-Dihydroxycyclohexan, Diethylen-glykol, Dipropylenglykol, Tripropylenglykol, Triole, wie 1,2,4-, 1,3,5-Trihydroxy-cyclo-hexan, Glycerin und Trimethylolpropan, und niedermolekulare hydroxylgruppenhaltige Polyalkylenoxide auf Basis Ethylen- und/oder 1,2-Propylenoxid und den vorgenannten Diolen und/oder Triolen als Startermoleküle. Besonders bevorzugt werden als Kettenverlängerer C) Diole, insbesondere 1,4-Butandiol, Monoethylenglykol, Diethylenglykol oder Dipropylenglykol, eingesetzt.

Der Anteil an Kettenverlängerungsmittel und/oder Vernetzungsmittel C) am Gesamtgewicht der Komponenten B) bis F) beträgt, falls vorhanden, vorzugsweise 1 bis 30 Gew.-%, besonders bevorzugt 3 bis 20 Gew.-% und insbesondere 4 bis 15 Gew.-%.

Als Treibmittel D) wird vorzugsweise Treibmittel, enthaltend Wasser, eingesetzt. Als Treibmittel D) können

neben Wasser noch allgemein bekannte chemisch und/oder physikalisch wirkende Verbindungen eingesetzt werden. Unter chemischen Treibmitteln versteht man Verbindungen, die durch Reaktion mit Isocyanat gasförmige Produkte bilden, wie beispielsweise Wasser oder Ameisensäure. Unter physikalischen Treibmitteln versteht man Verbindungen, die in den Einsatzstoffen der Polyurethan-Her-stellung gelöst oder emulgiert sind und unter den Bedingungen der Polyurethanbildung verdampfen. Dabei handelt es sich beispielsweise um Kohlenwasserstoffe, halogenierte Kohlenwasserstoffe, und andere Verbindungen, wie zum Beispiel perfluorierte Alkane, wie Perfluorhexan, Fluorchlorkohlenwasserstoffe, und Ether, Ester, Ketone und/oder Acetale, beispielsweise (cyclo)aliphatische Kohlenwasserstoffe mit 4 bis 8 Kohlenstoffatomen, oder Fluorkohlenwasserstoffe, wie Solkane® 365 mfc der Firma Solvay Fluorides LLC. In einer bevorzugten Ausführungsform wird als Treibmittel D) Wasser als alleiniges Treibmittel eingesetzt.

Der Gehalt an Wasser beträgt in einer bevorzugten Ausführungsform von 1 bis 10 Gew.-%, bevorzugt 2 bis 9 Gew.-%, besonders bevorzugt 3 bis 7 Gew.-%, bezogen auf das Gesamtgewicht der Komponenten B) bis F).

Zu den Katalysatoren E) gehören Verbindungen, die die Reaktion der reaktive Wasserstoffatome, insbesondere Hydroxylgruppen, enthaltenden Polyhydroxyverbindungen B) sowie des chemischen Treibmittels mit den organischen Polyisocyanaten A) beschleunigen. In Betracht kommen organische Metallverbindungen, vorzugsweise organische Zinnverbindungen, wie Zinn(II)-salze von organischen Carbonsäuren, beispielsweise Zinn(II)-acetat, Zinn(II)-octoat, Zinn (II)-ethylhexanoat, Zinn(II)-laurat und die Dialkylzinn(IV)-salze von organischen Carbonsäuren, beispielsweise Dibutylzinndiacetat, Dibutylzinndilaurat, Dibutylzinnmaleat, Dioctylzinndiacetat sowie tertiäre Amine wie Tri-ethylamin, Tributylamin, Dimethylcyclohexylamin, Dimethylbenzylamin, N-Methylimida-zol, N-Methyl-, N-Ethyl-, N-Cyclohexylmorpholin, N,N,N',N'-Tetramethylethylendiamin, N,N,N',N'-Tetramethylbutylendiamin, N,N,N',N'-Tetramethyl-hexylendiamin-1,6, Pentamethyldiethylentriamin, Tetramethyldiaminoethylether, Bis-(dimethylaminopropyl)-harnstoff, Dimethylpiperazin, 1,2-Dimethylimidazol, 1-Aza-bicyclo-[3,3,0]-octan, 1,4-Diaza-bicyclo-[2,2,2]-octan, und Alkanolaminverbindungen wie Triethanolamin, Tris-isopropanolamin, N-Methyl- und N-Ethyl-diethanolamin und Dimethylethanolamin. Als Katalysatoren kommen weiter in Betracht: Tris-(dialkylamino)-s-hexahydrotriazine, insbesondere Tris-(N,N-dimethylamino)-s-hexahydrotriazin, Tetraalkylammoniumsalze wie beispielsweise N,N,N-Trimethyl-N-(2-hydroxy-propyl)-formiat, N,N,N-Trimethyl-N-(2-hydroxy-propyl)-2-ethylhexanoat, Tetraalkylammoniumhydroxide wie Tetramethyl-ammoniumhydroxid, Alkalihydroxide wie Natriumhydroxid, Alkalialkoholate wie Natriummethylat und Kaliumisopropylat, sowie Alkali- oder Erdalkalisalze von Fettsäuren mit 1 bis 20 C-Atomen und gegebenenfalls seitenständigen OH-Gruppen.

Beispielsweise können gegenüber Isocyanaten reaktionsfähige tertiäre Amine wie beispielsweise N,N-Dimethylaminopropylamin, Bis-(Dimethylaminopropyl)-amin, N,N-Dimethylaminopropyl-N'-methylethanolamin, Dimethylaminoethoxyethanol, Bis-(Dimethylaminopropyl)amino-2-propanol, N,N-Dimethylaminopropyldipropanolamin, N,N,N'-Trimethyl-N'-hydroxyethyl-bisaminoethylether, N,N-Dimethylaminopropylharnstoff, N-(2-Hydroxypropyl)-imidazol, N-(2-Hydroxyethyl)-imidazol, N-(2-Aminopropyl)-imidazol und/oder die in EP-A 0 629 607 beschriebenen Umsetzungsprodukte aus Acetessigsäureethylester, Polyetherpolyolen und 1-(Dimethylamino)-3-amino-propan als Katalysator e) verwendet werden.

Als Hilfsmittel und Zusatzstoffe F) können Schaumstabilisatoren, Zellöffner, oberflächenaktive Substanzen, Reaktionsverzögerer, Stabilisatoren gegen Alterungs- und Witterungseinflüsse, Weichmacher, Flammhemmer, fungistatisch und bakteriostatisch wirksame Substanzen, Pigmente und Farbstoffe sowie die an sich bekannten üblichen organischen und anorganischen Füllstoffe eingesetzt werden.

Als Schaumstabilisatoren werden vorzugsweise siliconbasierte Schaumstabilisatoren verwendet. Weiter können Siloxan-Polyoxyalkylen-Copolymere, Organopolysiloxane, ethoxylierte Fettalkohole und Alkylphenole und Ricinusöl- bzw. Ricinolsäureester als Schaumstabilisatoren verwendet werden.

Als Zellöffner wirken beispielsweise Paraffine, Polybutadiene, Fettalkohole und Dimethylpolysiloxane.

Als Stabilisatoren gegen Alterungs- und Witterungseinflüsse werden meist Antioxidantien eingesetzt. Dies können beispielsweise sterisch gehinderte Phenole, HALS-Stabilisatoren (hindered amine light stabilizer), Triazine, Benzophenone und Benzotriazole sein.

Als oberflächenaktive Substanzen kommen beispielsweise Verbindungen in Betracht, welche zur Unterstützung der Homogenisierung der Ausgangsstoffe dienen und eine Phasenstabilität der Polyol-Komponente über längere Zeiträume gewährleisten. Diese sind gegebenenfalls auch geeignet, die Zellstruktur zu regulieren. Genannt seien beispielsweise Emulgatoren, wie die Natriumsalze von Ricinusölsulfaten, oder von Fettsäuren sowie Salze von Fettsäuren mit Aminen, z. B. ölsaures Diethylamin, stearinsaures Diethanolamin, ricinolsaures Diethanolamin, Salze von Sulfonsäuren, z. B. Alkali- oder Ammoniumsalze von Dodecylbenzol- oder Dinaphthylmethandisulfonsäure und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnussöl und Zellregler, wie Paraffine, Fettalkohole und Dimethylpolysiloxane. Zur Verbesserung der Emulgierwirkung, der Zellstruktur und/oder Stabilisierung des Schaums eignen sich ferner oligomere Polyacrylate mit Polyoxyalkylen- und Fluoralkanresten als Seitengruppen.

Die oberflächenaktiven Substanzen werden üblicherweise in Mengen von 0,01 bis 5 Gew.-%, bezogen auf das Gesamtgewicht der Polyhydroxylverbindungen B), eingesetzt.

Geeignete Flammschutzmittel sind beispielsweise Trikresylphosphat, Tris-(2-chlorethyl)phosphat, Tris-(2-chlorpropyl)phosphat, Tris(1,3-dichlorpropyl)phosphat, Tris-(2,3-dibrompropyl)phosphat und Tetrakis-(2-chlorethyl)-ethylendiphosphat.

Außer den bereits genannten halogensubstituierten Phosphaten können auch anorganische Flammschutzmittel, wie roter Phosphor, Aluminiumoxidhydrat, Antimontrioxid, Arsenoxid, Ammoniumpolyphosphat, Blähgraphit und Calciumsulfat oder Cyanursäurederivate, wie z. B. Melamin oder Mischungen aus mindestens zwei Flammschutzmitteln, wie z. B. Ammoniumpolyphosphaten und Melamin und/oder Blähgraphit sowie gegebenenfalls Stärke zum Flammfestmachen der erfindungsgemäß hergestellten PU-Schaumstoffe verwendet werden.

Als Füllstoffe, insbesondere verstärkend wirkende Füllstoffe, können die an sich bekannten, üblichen organischen und anorganischen Füllstoffe, Verstärkungsmittel und Beschwerungsmittel zugegeben werden. Im einzelnen seien beispielhaft genannt: anorganische Füllstoffe wie z. B. silikatische Mineralien, beispielsweise Schichtsilikate wie Antigorit, Serpentin, Hornblenden, Amphibole, Chrysotil, Zeolithe, Talkum; Metalloxide, wie z. B. Kaolin, Aluminiumoxide, Aluminiumsilikat, Titanoxide und Eisenoxide, Metallsalze wie z. B. Kreide, Schwerspat und anorganische Pigmente, wie Cadmiumsulfid, Zinksulfid sowie Glaspartikel. Als organische Füllstoffe kommen beispielsweise in Betracht: Russ, Melamin, Kollophonium, Cyclopentadienylharze und polymermodifizierte Polyoxyalkenpolyole.

Nähere Angaben über Verwendungs- und Wirkungsweise der oben genannten Hilfsmittel und Zusatzmittel sowie weitere Beispiele sind z. B. im "Kunststoffhandbuch, Band 7, Polyurethane", Carl Hanser Verlag, 3. Auflage 1993, Kapitel 3.4 angegeben.

Organische Polyisocyanate A), Polyhydroxyverbindungen B), Kettenverlängerungs- und/oder Vernetzungsmittel C), Treibmittel D), Katalysatoren E) und gegebenenfalls Hilfsmittel und Zusatzstoffe F) werden vorzugsweise in solchen Mengen zur Umsetzung gebracht, dass der Isocyanatindex im Bereich von 80 bis 150, bevorzugt 95 bis 130, besonders bevorzugt 98 bis 118 liegt.

Dabei wird unter Isocyanatindex im Rahmen der vorliegenden Erfindung das stöchiometrische Verhältnis von Isocyanatgruppen zu mit Isocyanat reaktiven Gruppen, multipliziert mit 100, verstanden. Unter mit Isocyanat reaktiven Gruppen werden dabei alle in der Reaktionsmischung enthaltenen, mit Isocyanat reaktiven Gruppen, einschließlich chemischer Treibmittel, verstanden, nicht aber die Isocyanatgruppe selbst.

Die Polyurethanschaumstoffe werden vorzugsweise nach dem one-shot-Verfahren in Form von großen Schaumstoffblöcken kontinuierlich in Blockschaumanlagen oder diskontinuierlich in offenen Schaumstoff-Formwerkzeugen hergestellt. Bei Verwendung einer Mischkammer mit mehreren Zulaufdüsen können die Ausgangskomponenten einzeln zugeführt und in der Mischkammer intensiv vermischt werden. Als besonders vorteilhaft hat es sich erwiesen, nach dem 2-Komponenten-Verfahren zu arbeiten und als sogenannte A-Komponente ein Gemisch aus der Mischung der Polyhydroxyverbindungen B), Kettenverlängerungs- und/oder Vernetzungsmittel C), Treibmittel D), Katalysatoren E) und gegebenenfalls Hilfsmittel und Zusatzstoffe F) zu verwenden und als sogenannte B-Komponente die organischen Polyisocyanate A) einzusetzen. Da die A- und B-Komponenten sehr gut lagerstabil sind, können sie in dieser Form einfach transportiert und brauchen vor der Verarbeitung nur noch in den entsprechenden Mengen intensiv gemischt werden. Die Vermischung der Aufbaukomponenten A) bis F) oder der A-Komponente und der B-Komponente kann mit Hochdruck- oder Niederdruck-Verarbeitungsanlagen durchgeführt werden.

Zur Herstellung der PU-Schaumstoffe werden die beschriebenen Ausgangsstoffe, zweckmäßigerweise in Form der A- und B-Komponenten, bei Temperaturen von ungefähr 15 bis 60 °C, vorzugsweise 20 bis 40 °C gemischt und danach die Reaktionsmischung in offenen, gegebenenfalls temperierten Formwerkzeugen oder in kontinuierlich arbeitenden Blockschaumanlagen aufschäumen gelassen.

Die erhaltenen plastisch verformbaren PU-Schaumstoffe besitzen in Abhängigkeit von der verwendeten Treibmittelmenge Vorteilhafterweise Dichten von 10 bis 45 g/cm$^3$, vorzugsweise von 15 bis 35 g/cm$^3$. Die Produkte zeigen gleichzeitig eine hohe Härte und Biegefestigkeit und eine sehr gute Hydrolysebeständigkeit.

Aus den erhaltenen PU-Schaumstoffblöcken können, falls erforderlich, entsprechend den herzustellenden Formkörper dimensionierte Schaumstoffblöcke geschnitten und diese in PU-Schaumstoffplatten mit einer Dicke von 4 bis 50 mm, vorzugsweise 6 bis 30 mm und insbesondere von 6 bis 20 mm gespalten werden. Hierzu geeignet sind alle technisch üblichen Spaltvorrichtungen, wobei in der Praxis vorzugsweise Horizontalspaltanlagen mit umlaufendem Bandmesser verwendet werden.

Die erhaltenen plastisch verformbaren PUR-Schaumstoffplatten können ein- oder mehrseitig mit Klebstoffen, z. B. feuchtigkeitshärtenden Klebstoffen auf Isocyanatbasis oder thermoplastischen Schmelzklebstoffen, beschichtet und danach mit Verstär-kungs-, Abdeck- und/oder Dekormaterialien kaschiert werden.

Zur Bildung der Sandwichelemente können übliche Verfahren eingesetzt werden, beispielsweise das Formen und Aushärten in einem beheizten Werkzeug.

Erfindungsgemäße plastisch verformbare Polyurethan-Schaumstoffe weisen eine höhere Offenzelligkeit auf, haben ausgezeichnete Schalldämmeigenschaften und eignen sich daher hervorragend zur Verwendung als Innenverkleidung eines Kraftfahrzeugs, insbesondere als Dachhimmel.

Anhand der nachfolgenden Beispiele werden die Vorteile der Erfindung verdeutlicht.

**Beispiele**

Ausgangsmaterialien

| | |
|---|---|
| Polyol 1: | Glycerin-gestartetes Polyoxypropylen mit einer OH Zahl von 400 |
| Polyol 2: | Glycerin-gestartetes Polyetherpolyol mit einer OH Zahl von 55 und überwiegend primären OH-Gruppen (Zusammensetzung 80% Propylenoxid, 20 % Ethylenoxid) |
| Polyol 3: | Propylenglykol-gestartetes Polyoxypropylen mit einer OH Zahl von 250 |
| Polyol 4: | Glycerin-gestartetes Polyoxypropylen mit einer OH Zahl von 800 |
| Polyol 5: | Glycerin/Wasser-gestartetes Polyetherpolyol mit einer OH Zahl von 30 und überwiegend primären OH-Gruppen (Zusammensetzung 90% Propylenoxid, 10 % Ethylenoxid) |
| Polyol 6: | Glycerin-gestartetes Polyoxypropylen mit einer OH Zahl von 570 |
| Polyol 7: | Glycerin-gestartetes Polyetherpolyol mit einer OH Zahl von 28 und überwiegend primären OH-Gruppen (Zusammensetzung 80% Propylenoxid, 20 % Ethylenoxid) |
| Polyol 8: | Trimethylolpropan-gestartetes Polyoxypropylen mit einer OH Zahl von 160 |
| Polyol 9: | Glycerin-gestartetes Polyoxypropylen mit einer OH Zahl von 385 |
| Polyol 11: | hyperverzweigtes Polycarbonat enthaltend Polyol 1 |
| Polyol 12: | hyperverzweigtes Polycarbonat enthaltend Polyol 1 |
| Isocyanat 1: | hyperverzweigtes Polyurethanpolyisocyanat enthaltend 2,4-Toluylendiisocyanat, Polyol 8 sowie Isocyanat 4 |
| Isocyanat 2: | hyperverzweigtes Polyurethanpolyisocyanat enthaltend Polyol 8 und Isocyanat 6 |
| Isocyanat 3: | Polyphenylenpolymethylenpolyisocyanat-Gemisch (NCO = 31%) |
| Isocyanat 4: | 50% Isocyanat 6, 50% Isocyanat 5 |
| Isocyanat 5: | Diphenylmethandiisocyanat (4,4'-MDI > 50%) |
| Isocyanat 6: | Diphenylmethandiisocyanat (4,4'-MDI < 50%) |
| Kettenverlängerungsmittel: | 1,4-Butandiol |
| Vernetzer: | Glycerin |
| Katalysator 1: | 3-Dimethylaminoisopropyl-diisopropanolamin |
| Katalysator 2: | Bis-(dimethylaminoethyl)ether (70%ig in DPG) |
| Katalysator 3: | Triethylendiamin |
| Inhibitor: | Diglykol-bis-Chlorformiat |
| Schaumstabilisator 1: | Tegostab B8409 |
| Schaumstabilisator 2: | Tegostab B8476 |
| Treibmittel: | Wasser |

Die Polyol-Komponenten A1 bis A4 und Isocyanat-Komponente B1 bis B4 wurden mit der in der Tabelle 1 angegebenen Zusammensetzung hergestellt:

Tabelle 1:

| Polyol-Komponente | A1 | A2 | A3 | A4 |
|---|---|---|---|---|
| Polyol 1 | 26,75 | 16,75 | 16,75 | 16,75 |
| Polyol 2 | 42,9 | 53 | 53 | 52,9 |
| Polyol 3 | 5 | 5 | 5 | 5 |
| Polyol 4 | 10 | 10 | 10 | 10 |
| Kettenverlängerer | 7,4 | 7,4 | 7,4 | 7,4 |
| Vernetzer | 2,4 | 2,4 | 2,4 | 2,4 |
| Katalysator 2 | 0,05 | 0,05 | 0,05 | 0,05 |
| Katalysator 1 | 0,6 | 0,6 | 0,6 | 0,6 |
| Stabilisator 1 | 0,5 | 0,5 | 0,5 | 0,5 |
| Treibmittel | 4,1 | 4 | 4 | 4 |

(fortgesetzt)

| Polyol-Komponente | A1 | A2 | A3 | A4 |
|---|---|---|---|---|
| | | | | |
| Isocyanat | B1 | B2 | B3 | B4 |
| Isocyanat 1 | - | 20 | 30 | - |
| Isocyanat 2 | - | - | - | 30 |
| Isocyanat 3 | 60 | 48 | 42 | 42 |
| Isocyanat 4 | 35 | 28 | 24,5 | 24,5 |
| Isocyanat 5 | 5 | 4 | 3,5 | 3,5 |

Beispiel 1

100 Gew.-% der Polyol-Komponente A1 werden mit 160,1 Gew.-% des Isocyanats B1 mittels Vollrathrührer (Drehzahl 1800, Rührerdurchmesser 10 cm) 20 Sekunden vermischt und in eine 125L Holzkiste gegeben. Die Komponenten haben vor der Reaktion Raumtemperatur. Die Temperatur während der Reaktion wird mittels eines Ni-Cr-Ni-Drahtes im Kern des Schaumes kontrolliert. Nach 20 Minuten kann der so hergestellte Schaum entformt werden.

Beispiel 2

100 Gew.-% der Polyol-Komponente A2 werden mit 162,7 Gew.-% des Isocyanats B2 (enthält 20 Gew.-% des Polyprepolymers) mittels Vollrathrührer (Drehzahl 1800, Rührerdurchmesser 10 cm) 20 Sekunden vermischt und in eine 125L Holzkiste gegeben. Die Komponenten haben vor der Reaktion Raumtemperatur. Die Temperatur während der Reaktion wird mittels eines Ni-Cr-Ni-Drahtes im Kern des Schaumes kontrolliert. Nach 20 Minuten kann der so hergestellte Schaum entformt werden.

Beispiel 3

100 Gew.-% der Polyol-Komponente A3 werden mit 171 Gew.-% des Isocyanats B3 (enthält 30 Gew.-% des Polyprepolymers) mittels Vollrathrührer (Drehzahl 1800, Rührerdurchmesser 10 cm) 20 Sekunden vermischt und in eine 125L Holzkiste gegeben. Die Komponenten haben vor der Reaktion Raumtemperatur. Die Temperatur während der Reaktion wird mittels eines Ni-Cr-Ni-Drahtes im Kern des Schaumes kontrolliert. Nach 20 Minuten kann der so hergestellte Schaum entformt werden.

Beispiel 4

100 Gew.-% der Polyol-Komponente A3 werden mit 172 Gew.-% des Isocyanats B4 (enthält 20 Gew.-% des Polyprepolymers) mittels Vollrathrührer (Drehzahl 1800, Rührerdurchmesser 10cm) 20 Sekunden vermischt und in eine 125L Holzkiste gegeben. Die Komponenten haben vor der Reaktion Raumtemperatur. Die Temperatur während der Reaktion wird mittels eines Ni-Cr-Ni-Drahtes im Kern des Schaumes kontrolliert. Nach 20 Minuten kann der so hergestellte Schaum entformt werden.

Die mechanischen Eigenschaften der Produkte aus den Reaktionsmischungen gemäß der Beispiele 1 bis 4 wurden bestimmt und sind in Tabelle 2 aufgelistet.

Tabelle 2:

| | Beispiel 1 | Beispiel 2 | Beispiel 3 | Beispiel 4 |
|---|---|---|---|---|
| Abblasverhalten | leicht bis ordentlich abgeblasen | leicht bis ordentlich abgeblasen | leicht bis ordentlich abgeblasen | leicht bis ordentlich abgeblasen |
| Max. Temperatur (°C) | 191 | 179 | 177 | 176 |
| Index | 111 | 111 | 111 | 110 |

(fortgesetzt)

| | Beispiel 1 | Beispiel 2 | Beispiel 3 | Beispiel 4 |
|---|---|---|---|---|
| Abblasverhalten | leicht bis ordentlich abgeblasen | leicht bis ordentlich abgeblasen | leicht bis ordentlich abgeblasen | leicht bis ordentlich abgeblasen |
| Mischungsverhältnis 100: | 160 | 163 | 171 | 172 |
| Biegefestigkeit/ kPa | 152 | 177 | 170 | 165 |
| Durchbiegung/ mm | 25,9 | 21,9 | 23,4 | 25,2 |
| E-Modul/ kPa | 1677 | 1673 | 1648 | 1706 |
| Luftdurchlässigkeit/ $dm^3/s$ | 0,023 | 0,034 | 0,032 | 0,043 |
| Dichte/ g/L | 33,7 | - | 36,8 | 37,7 |

Tabelle 2 verdeutlicht, dass unter Beibehaltung der mechanischen Eigenschaften die Reaktionstemperatur um 12 °C (Beispiel 2) bzw. 14 °C (Beispiel 3) und 15 °C (Beispiel 4) gesenkt werden kann.

Die Polyol-Komponenten A5 bis A7 und Isocyanat-Komponente B5 bis B7 wurden mit der in Tabelle 3 angegebenen Zusammensetzung hergestellt.

Tabelle 3:

| Polyol-Komponente | A5 | A6 | A7 |
|---|---|---|---|
| Polyol 5 | 19 | 19 | 19 |
| Polyol 6 | 40,61 | 30,51 | 30,51 |
| Polyol 7 | 9,5 | 9,5 | 9,5 |
| Polyol 3 | 5,2 | 5,2 | 5,2 |
| Polyol 8 | 9,5 | 9,5 | 9,5 |
| Polyol 11 | - | 10 | - |
| Polyol 12 | - | - | 10 |
| Kettenverlängerer | 7,6 | 7,6 | 7,6 |
| Vernetzer | 2,25 | 2,25 | 2,25 |
| Stabilisator 2 | 0,65 | 0,65 | 0,65 |
| Stabilisator 1 | 0,1 | 0,1 | 0,1 |
| Katalysator 3 | 0,41 | 0,41 | 0,41 |
| Katalysator 1 | 0,08 | 0,08 | 0,08 |
| Treibmittel | 4,15 | 4,15 | 4,15 |
| Isocyanat | B5 | B6 | B7 |
| Isocyanat 3 | 60 | 60 | 60 |
| Isocyanat 4 | 35 | 35 | 35 |
| Isocyanat 5 | 5 | 5 | 5 |

Beispiel 5

100 Gew.-% der Polyol-Komponente A5 werden mit 165 Gew.-% des Isocyanats B5 mittels Vollrathrührer (Drehzahl 1800, Rührerdurchmesser 10cm) 20 Sekunden vermischt und in eine 125L Holzkiste gegeben. Die Komponenten haben vor der Reaktion Raumtemperatur. Die Temperatur während der Reaktion wird mittels eines Ni-Cr-Ni-Drahtes im Kern des Schaumes kontrolliert. Nach 20 Minuten kann der so hergestellte Schaum entformt werden.

Beispiel 6

100 Gew.-% der Polyol-Komponente A6 (enthält 10 Gew.-% Polymerpolyol) werden mit 165 Gew.-% des Isocyanats B6 mittels Vollrathrührer (Drehzahl 1800, Rührerdurchmesser 10cm) 20 Sekunden vermischt und in eine 125L Holzkiste gegeben. Die Komponenten haben vor der Reaktion Raumtemperatur. Die Temperatur während der Reaktion wird mittels eines Ni-Cr-Ni-Drahtes im Kern des Schaumes kontrolliert. Nach 20 Minuten kann der so hergestellte Schaum entformt werden.

Beispiel 7

100 Gew.-% der Polyol-Komponente A7 (enthält 10 Gew.-% des Polymerpolyols) werden mit 165 Gew. % des Isocyanats B7 mittels Vollrathrührer (Drehzahl 1800, Rührerdurchmesser 10cm) 20 Sekunden vermischt und in eine 125L Holzkiste gegeben. Die Komponenten haben vor der Reaktion Raumtemperatur. Die Temperatur während der Reaktion wird mittels eines Ni-Cr-Ni-Drahtes im Kern des Schaumes kontrolliert. Nach 20 Minuten kann der so hergestellte Schaum entformt werden.

Die mechanischen Eigenschaften der hergestellten Proben wurden bestimmt und sind in Tabelle 4 aufgelistet.

Tabelle 4:

| | Beispiel 5 | Beispiel 6 | Beispiel 7 |
|---|---|---|---|
| Abblasverhalten | stark abgeblasen | leicht abgeblasen | leicht abgeblasen |
| Max. Temperatur (°C) | 199 | 193 | 193 |
| Index | 105,95 | 112 | 112 |
| Mischungsverhältnis 100: | 165 | 165 | 165 |
| Biegefestigkeit/ kPa | 203 | 224 | 175 |
| Durchbiegung/ mm | 23,1 | 21,3 | 22,9 |
| E-Modul/ kPa | 2269 | 2425 | 1569 |
| Luftdurchlässigkeit/ $dm^3/s$ | 0,017 | 0,019 | 0,018 |
| Dichte/ g/l | 32,9 | 33,5 | 32,0 |

Tabelle 4 verdeutlicht, dass unter Beibehaltung der mechanischen Eigenschaften in den Beispielen 6 und 7 im Vergleich zur Referenz (Beispiel 5) die Reaktionstemperatur jeweils um 6 °C gesenkt werden kann.

Synthese der hyperverzweigten Polymere

Isocyanat 1: Hyperverzweigtes Polyurethanpolyisocyanat enthaltend Aromaten, Propylenoxy-, und Isocyanateinheiten

In einen 4 L Vierhalskolben, der mit Rührer, Innenthermometer und Rückflusskühler ausgestattet war, wurde 2,4-Toluylendiisocyanat (407.5 g, 2.34 mol), das zuvor mit 5 ppm Benzoylchlorid versetzt wurde, vorgelegt und bei 200 1/min bei 22°C gerührt. Anschließend wurde ein Triol (1217.5 g, 1.17 mol), das zuvor durch Propoxylierung von Trimethylolpropan mit 15 Propylenoxideinheiten (Polyol 8) gewonnen wurde, innerhalb von 20 min bei maximal 25°C hinzugegeben. Die Kontrolle der Reaktionstemperatur erfolgte dabei gegebenenfalls durch gelegentliches Kühlen des Reaktionskolbens mit einer Eis/Wasser-Mischung. Anschließend wurde die Reaktionstemperatur auf 60 °C erhöht und der Reaktionsverlauf durch gelegentliche Probennahme und Titration der NCO-Gruppen verfolgt. Sobald ein NCO-Wert von 5.5 Gew.-% NCO / g Polymer erreicht wurde, wurde die Umsetzung durch Zugabe von Isocyanat 4 (1626 g) abgestoppt, so dass eine Lösung eines hyperverzweigten Polyurethanpolyisocyanats in Isocyanat 4 (50 Gew.-%) erhalten wurde. Die Reaktionsmischung wurde weitere 2 h lang bei 60°C gerührt. Anschließend wurde das Produkt abgekühlt und analysiert.

Der NCO-Gehalt wurde mittels NCO-Titration zu 18.5 Gew.-% NCO /g Polymer bestimmt, die Molgewichte wurden mittels GPC (Eluent = DMAc, Kalibrierung = PMMA) zu $M_n$ = 230 g/mol, $M_w$ = 1300 g/mol bestimmt.

Isocyanat 2: Hyperverzweigtes Polyurethanpolyisocyanat enthaltend Aromaten, Propylenoxy-, und Isocyanateinheiten:

In einen 4 L Vierhalskolben, der mit Rührer, Innenthermometer und Rückflusskühler ausgestattet war, wurde

Isocyanat 6 (584.0 g, 2.33 mol), das zuvor mit 5 ppm Benzoylchlorid versetzt wurde, vorgelegt und bei 200 1/min bei 50 °C gerührt. Anschließend wurde ein Triol (1216.0 g, 1.17 mol), das zuvor durch Propoxylierung von Trimethylolpropan mit 15 Propylenoxideinheiten gewonnen wurde (Polyol 8), innerhalb von 25 min bei maximal 50°C hinzugegeben. Die Kontrolle der Reaktionstemperatur erfolgte dabei gegebenenfalls durch gelegentliches Kühlen des Reaktionskolbens mit einer Eis/Wasser-Mischung. Anschließend wurde die Reaktionstemperatur auf 60°C erhöht und der Reaktionsverlauf durch gelegentliche Probennahme und Titration der NCO-Gruppen verfolgt. Sobald ein NCO-Wert von 5.5 Gew.-% NCO / g Polymer erreicht wurde, wurde die Umsetzung durch Zugabe von Isocyanat 6 (1800 g) abgestoppt, so dass eine Lösung eines hyperverzweigten Polyurethanpolyisocyanats in Isocyanat 6 (50 Gew.-%) erhalten wurde. Die Reaktionsmischung wurde weitere 2 h lang bei 60 °C gerührt. Anschließend wurde das Produkt abgekühlt und analysiert.

Der NCO-Gehalt wurde mittels NCO-Titration zu 18.3 Gew.-% NCO/g Polymer bestimmt, die Molgewichte wurden mittels GPC (Eluent = DMAc, Kalibrierung = PMMA) zu $M_n$ = 240 g/mol, $M_w$ = 1600 g/mol bestimmt.

Polyol 11: Hyperverzweigtes Polycarbonatpolyol enthaltend Propylenoxy-, Hydroxy- und Stearylcarbamateinheiten

In einem 4 L-Vierhalskolben, der mit Rührer, Innenthermometer und Rückflusskühler versehen war, wurde Diethylcarbonat (549.8 g, 4.65 mol) mit einem Triol (2000.0 g, 4.65 mol), das zuvor durch Propoxylierung von Trimethylolpropan mit 5 Propylenoxideinheiten gewonnen wurde (Polyol 1), in Gegenwart von Kaliumhydroxid (0.4 g) bei Normaldruck unter leichter Stickstoffbegasung bei ca. 140 °C umgesetzt. Hierbei bildete sich im Laufe der Reaktion in der Reaktionsmischung stetig Ethanol als Kondensationsnebenprodukt, so dass sich der Siedepunkt der Reaktionsmischung innerhalb von 8 h bis auf ca. 120 °C absenkte. Nachdem die Siedetemperatur konstant blieb, wurde der Rückflusskühler durch eine Destillationsvorrichtung, bestehend aus einer 20 cm Füllkörperkolonne, einem absteigendem Kühler und einer Vorlage, ausgetauscht und das bei der Reaktion gebildete Ethanol kontinuierlich abdestilliert. Nachdem insgesamt etwa 340 g Ethanol entfernt worden waren, was einem Gesamtumsatz bezüglich Ethanol von ca. 80 % entspricht, wurde die Reaktionsmischung auf 100 °C abgekühlt und zur Neutralisation des Kaliumhydroxids 85 %ige Phosphorsäure (0.5 g) hinzugegeben, bis sich ein pH-Wert von weniger als 7 eingestellt hatte. Die Mischung wurde 1 h lang bei 100 °C gerührt. Anschließend wurde die Reaktionsmischung ca. 4 h lang bei 180-220 °C mit Stickstoff begast und auf diese Weise Reste von Ethanol (ca. 10 g) entfernt. Anschließend wurde das Produkt abgekühlt und analysiert.

Die OH-Zahl wurde zu 212 mg KOH/g bestimmt, die Molgewichte wurden mittels GPC (Eluent = DMAc, Kalibrierung = PMMA) zu $M_n$ = 1400 g/mol, $M_w$ = 3000 g/mol bestimmt.

Das zuvor synthetisierte Polycarbonatpolyol wurde anschließend mit Stearylisocyanat hydrophob modifiziert. Hierzu wurden 1800 g (entspricht 6.8 mol OH-Gruppen bei einer OH-Zahl von 212 mg KOH/g) des Polycarbonatpolyols in einem 4 L-Vierhalskolben vorgelegt, der mit Rührer, Innenthermometer und Rückflusskühler ausgestattet war, und auf 100 °C erhitzt. Anschließend wurden innerhalb von 10 min 302 g (1,0 mol, 0.15 Äq. der OH-Gruppen) Stearylisocyanat hinzugegeben und die Reaktionsmischung bei dieser Temperatur 24 h gerührt. Anschließend wurde das Produkt abgekühlt und analysiert.

Die OH-Zahl wurde zu 153 mg KOH/g bestimmt.

Polyol 12: Hyperverzweigtes Polycarbonatpolyol enthaltend Propylenoxy- und Hydroxyeinheiten:

In einem 4 L-Vierhalskolben, der mit Rührer, Innenthermometer und Rückflusskühler versehen war, wurde Diethylcarbonat (549.8 g, 4.65 mol) mit einem Triol (2000.0 g, 4.65 mol), das zuvor durch Propoxylierung von Trimethylolpropan mit 5 Propylenoxideinheiten gewonnen wurde (Polyol 1), in Gegenwart von Kaliumhydroxid (0.3 g) bei Normaldruck unter leichter Stickstoffbegasung bei ca. 140 °C umgesetzt. Hierbei hat sich im Laufe der Reaktion in der Reaktionsmischung stetig Ethanol als Kondensationsnebenprodukt gebildet, so dass sich der Siedepunkt der Reaktionsmischung innerhalb von 8 h bis auf ca. 120 °C absenkte. Nachdem die Siedetemperatur konstant blieb, wurde der Rückflusskühler durch eine Destillationsvorrichtung, bestehend aus einer 20 cm Füllkörperkolonne, einem absteigendem Kühler und einer Vorlage, ausgetauscht und das bei der Reaktion gebildete Ethanol kontinuierlich abdestilliert. Nachdem insgesamt etwa 320 g Ethanol entfernt worden waren, was einem Gesamtumsatz bezüglich Ethanol von ca. 75 % entspricht, wurde die Reaktionsmischung auf 100 °C abgekühlt und zur Neutralisation des Kaliumhydroxids 85 %ige Phosphorsäure (0.5 g) hinzugegeben, bis sich ein pH-Wert von weniger als 7 eingestellt hatte. Die Mischung wurde 1 h lang bei 100 °C gerührt. Anschließend wurde die Reaktionsmischung ca. 4 h lang bei 180-220 °C mit Stickstoff begast und auf diese Weise Reste von Ethanol (ca. 20 g) entfernt.
Anschließend wurde das Produkt abgekühlt und analysiert.

Die OH-Zahl wurde zu 210 mg KOH/g bestimmt, die Molgewichte wurden mittels GPC (Eluent = DMAC, Kalibrierung = PMMA) zu $M_n$ = 1200 g/mol, $M_w$ = 3500 g/mol bestimmt.

## Patentansprüche

1. Verfahren zur Herstellung von plastisch verformbaren Polyurethan-Schaumstoffen, bei dem man

A) ein Polyisocyanat,
B) mindestens eine Polyhydroxyverbindung,
C) gegebenenfalls Kettenverlängerungs- und/oder Vernetzungsmittel,
D) Treibmittel enthaltend Wasser,
E) Katalysator sowie
F) gegebenenfalls sonstige Hilfsmittel und Zusatzstoffe

zu einer Reaktionsmischung vermischt und zu dem Polyurethanschaumstoff ausreagieren lässt, **dadurch gekennzeichnet, dass** die Komponente A) 0 bis 50 Gew.-%, bezogen auf die Komponente A), eines hyperverzweigten Polyisocyanats und die Komponente B) 0 bis 50 Gew.-%, bezogen auf die Komponente B), einer hyperverzweigten Polyhydroxyverbindung, ausgewählt aus einem hyperverzweigten Polyetherol, einem hyperverzweigten Polyesterpolyol und einem hyperverzweigten Polycarbonatpolyol, enthält, wobei mindestens eine der Komponenten A) oder B) mindestens 1 Gew.-% des betreffenden hyperverzweigten Polymers enthält.

**2.** Verfahren nach Anspruch 1, **dadurch gekennzeichnet, dass** die Komponente B) ein 2 bis 4-fach funktionelles Polyoxyalkylenpolyol mit einer Hydroxylzahl von 300 bis 900 und mindestens 5 Gew.-%, bezogen auf die Komponente B), eines di- bis trifunktionellen Polyoxyalkylenpolyol mit einer Hydroxylzahl von 25 bis 300 enthält.

**3.** Verfahren nach Anspruch 1 oder 2, **dadurch gekennzeichnet, dass** die in Komponente A) eingesetzten hyperverzweigten Polyisocyanate ein Molekulargewicht $M_w$ von 800 bis 50.000 g/mol und einen Verzweigungsgrad von 10 bis 80 % aufweisen.

**4.** Verfahren nach einem der Ansprüche 1 bis 3, **dadurch gekennzeichnet, dass** die in Komponente A) eingesetzten hyperverzweigten Polyisocyanate erhältlich sind durch

(i) Herstellen eines Additionsproduktes (A), das eine mit Isocyanat reaktive Gruppe und mindestens zwei Isocyanatgruppen enthält, durch Umsetzen eines

(a) Di- oder Polyisocyanats I mit
(b) Verbindungen mit mindestens zwei mit Isocyanat reaktiven Gruppen,

wobei mindestens eine der Komponenten (a) oder (b) funktionelle Gruppen mit gegenüber den funktionellen Gruppen der anderen Komponente unterschiedlicher Reaktivität aufweist und wobei das Umsetzungsverhältnis so gewählt wird, dass im Mittel das Additionsprodukt (A) eine mit Isocyanat reaktive Gruppe enthält,
(ii) gegebenenfalls intermolekulare Additionsreaktion des Additionsprodukts (A) zu einem Polyadditionsprodukt (P), das im Mittel eine mit Isocyanat reaktive Gruppe und mehr als zwei Isocyanatgruppen enthält, und
(iii) Umsetzen des Additionsproduktes (A) und/oder des Polyadditionsprodukts (P) mit einem Di- oder Polyisocyanat II,

wobei
das Polyisocyanat I ausgewählt ist aus der Gruppe bestehend aus 2,4-Toluylendiisocyanat (2,4-TDI), 2,4'-Diphenylmethandiisocyanat (2,4'-MDI), Triisocyanatotoluol, Isophorondiisocyanat (IPDI), 2-Butyl-2-ethylpentamethylendiisocyanat, 2-Isocyanatopropylcyclohexylisocyanat, 3(4)-Isocyanatomethyl-1-methylcyclohexylisocyanat, 1,4-Diisocyanato-4-methylpentan, 2,4'-Methylen-bis(cyclohexyl)diisocyanat und 4-Methylcyclohexan-1,3-diisocyanat (H-TDI),
die Verbindungen (b) ausgewählt ist aus der Gruppe bestehend aus Polyetherolen, enthaltend Oxyethylen- und/oder Oxypropylen-Einheiten, mit im Mittel pro Molekül des Starteralkohols 1 bis 80 Oxyethylen und/oder Oxypropylen-Gruppen,
das Di- oder Polyisocyanat II ausgewählt sind aus der Gruppe bestehend aus 4,4'-Diphenylmethandiisocyanat, Mischungen aus Diphenylmethandiisocyanaten und höherkernigen Homologen des Diphenylmethandiisocyanats (Polymer-MDI), 1,3- und 1,4-Phenylendiisocyanat, 4-Isocyanatomethyl-1,8-octamethylendiisocyanat, Hexamethylendiisocyanat, Isocyanurat-, Uretdion-, Urethan-, Allophanat-, Iminooxadiazindion- oder Biuretgruppen aufweisenden Oligomeren aus Hexamethylendiisocyanat, Urethan-, Allophanat-, Carbodiimid- oder Uretonimingruppen aufweisenden Oligomeren aus MDI oder Urethan-, Allophanat-, Carbodiimid- oder Uretonimingruppen aufweisende Oligomere aus TDI.

**5.** Verfahren nach Anspruch 4, **dadurch gekennzeichnet, dass** die als Verbindungen (b) eingesetzten Polyoxypropylen-Polyoxyethylenpolyole eine mittlere Funktionalität von 1,6 bis 3 und Molekulargewichte von 450 bis 12.000

aufweisen und mit Wasser oder 2- und 3-wertigen Alkoholen gestartet sind.

**6.** Verfahren nach einem der Ansprüche 1 bis 5, **dadurch gekennzeichnet, dass** die hyperverzweigten Polyester erhältlich sind durch Umsetzung mindestens einer aliphatischen, cycloaliphatischen, araliphatischen oder aromatischen Dicarbonsäure ($A_2$) oder von Derivaten derselben mit

a) mindestens einem mindestens trifunktionellen aliphatischen, cycloaliphatischen, araliphatischen oder aromatischen Alkohol ($B_3$), oder
b) mit mindestens einem zweiwertigen aliphatischen, cycloaliphatischen, araliphatischen oder aromatischen Alkohol ($B_2$) und mindestens einem x-wertigen aliphatischen, cycloaliphatischen, araliphatischen oder aromatischen Alkohol ($C_x$), der mehr als zwei OH-Gruppen aufweist, wobei x eine Zahl größer 2 ist,
oder durch Umsetzung mindestens einer aliphatischen, cycloaliphatischen, araliphatischen oder aromatischen Carbonsäure ($D_y$) oder deren Derivaten, die mehr als zwei Säuregruppen aufweist, wobei y eine Zahl größer 2 ist, mit
c) mindestens einem mindestens difunktionellen aliphatischen, cycloaliphatischen, araliphatischen oder aromatischen Alkohol ($B_2$), oder
d) mit mindestens einem zweiwertigen aliphatischen, cycloaliphatischen, araliphatischen oder aromatischen Alkohol ($B_2$) und mindestens einem x-wertigen aliphatischen, cycloaliphatischen, araliphatischen oder aromatischen Alkohol ($C_x$), der mehr als zwei OH-Gruppen aufweist, wobei x eine Zahl größer 2 ist,
e) gegebenenfalls in Gegenwart weiterer funktionalisierter Bausteine E und
f) optional anschließender Umsetzung mit einer Monocarbonsäure F,

wobei man das Verhältnis der reaktiven Gruppen im Reaktionsgemisch so wählt, dass sich ein molares Verhältnis von OH-Gruppen zu Carboxylgruppen oder deren Derivaten von 5:1 bis 1:5 einstellt.

**7.** Verfahren nach einem der Ansprüche 1 bis 6. **dadurch gekennzeichnet, dass** die hyperverzweigten Polycarbonate erhältlich sind durch

a) Umsetzung mindestens eines organischen Carbonats (A) der allgemeinen Formel $R^aOC(=O)OR^b$ mit mindestens einem aliphatischen Alkohol (B), welcher mindestens 3 OH-Gruppen aufweist, unter Eliminierung von Alkoholen $R^aOH$ bzw. $R^bOH$ zu einem oder mehreren Kondensationsprodukten (K), wobei $R^a$ und $R^b$ jeweils unabhängig voneinander ausgewählt sind unter geradkettigen oder verzweigten Alkyl-, Arylalkyl-, Cycloalkyl- und Arylresten, wobei $R^a$ und $R^b$ auch gemeinsam mit der Gruppe -OC(=O)O-, an die sie gebunden sind, für ein cyclisches Carbonat stehen können,
b) intermolekulare Umsetzung der Kondensationsprodukte (K) zu einem hochfunktionellen, hyperverzweigten Polycarbonat,

wobei das Mengenverhältnis der OH-Gruppen zu den Carbonaten im Reaktionsgemisch so gewählt wird, dass die Kondensationsprodukte (K) im Mittel entweder eine Carbonatgruppe und mehr als eine OH-Gruppe oder eine OH-Gruppe und mehr als eine Carbonatgruppe aufweisen.

**8.** Verfahren nach einem der Ansprüche 1 bis 7, **dadurch gekennzeichnet, dass** die Komponente A) als nicht hyperverzweigte Polyisocyanate ein Gemisch aus Diphenylmethandiisocyanaten und Polyphenylpolymethylenpolyisocyanaten enthält.

**9.** Verfahren nach einem der Ansprüche 1 bis 8, **dadurch gekennzeichnet, dass** die Komponente B) als nicht hyperverzweigte Polyhydroxyverbindungen Polyoxypropylenpolyoxyethylenpolyole mit einer mittleren Funktionalität von 1,6 bis 3 und einem Molekulargewicht von 450 bis 12.000, die mit Wasser oder 2- und 3-wertigen Alkoholen gestartet sind, enthält.

**10.** Verfahren nach einem der Ansprüche 1 bis 9, **dadurch gekennzeichnet, dass** man als Kettenverlängerer D) 1,4-Butandiol, Monoethylenglykol, Dipropylenglykol und/oder Tripropylenglykol einsetzt.

**11.** Verfahren nach einem der Ansprüche 1 bis 10, **dadurch gekennzeichnet, dass** man als Treibmittel C) Wasser einsetzt.

**12.** Plastisch verformbarer Polyurethan-Schaumstoff, erhältlich nach einem Verfahren gemäß einem der Ansprüche 1 bis 11.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0437787 A
- DE 4333795
- DE 102004062540
- EP 0851527 A
- DE 10138216
- DE 10147712
- EP 0629607 A


### In der Beschreibung aufgeführte Nicht-Patentliteratur


- Polyurethane. Kunststoffhandbuch. Carl Hanser Verlag, 1993, vol. 7
- **P.J. Flory.** *J. Am. Chem. Soc.,* 1952, vol. 74, 2718
- **H. Frey et al.** *Chem. Eur. J.,* 2000, vol. 6 (14), 2499
- Die Methode ist im Analytiker Taschenbuch. 1984, vol. 4, 433-442
- Ullmann’s Encyclopedia of Industrial Chemistry. Verlag Wiley-VCH, 2000